# EUROPEAN PATENT APPLICATION

(11) **EP 2 189 930 A1**
(43) Date of publication of application: **26.05.2010**
(21) Application number: 09176889.5
(22) Date of filing: 24.11.2009
(51) Int. Cl.: G06Q 10/00, G07G 1/14, G06Q 20/00

(54) **Delivery confirmation system, portable terminal, and computer program product**

(30) Priority: 25.11.2008 JP 2008299307
(71) Applicant: Casio Computer Co., Ltd., Tokyo 151-8543 (JP)
(72) Inventor: Homma, Taiga, Hamura-shi Tokyo 205-8555 (JP)
(74) Representative: Grünecker, Kinkeldey, Stockmair & Schwanhäusser Anwaltssozietät

(57) **Abstract**

A portable terminal, which is connected to a server, includes: a communication section to send and receive data to and from the server; a time obtaining section to obtain current time; a location obtaining section to obtain a current location of the portable terminal; an input section to input receipt confirmation information indicating that a recipient of a shipment has received the shipment; and a control section to cause a digital signature to be attached to electronic form data, and to cause the communication section to send the electronic form data with the digital signature to the server. The electronic form data includes the receipt confirmation information input through the input section when the shipment is received; the current time obtained by the time obtaining section when the shipment is received; and the current location obtained by the location obtaining section when the shipment is received.

## Description

### BACKGROUND OF THE INVENTION

### 1. Field of the Invention

The present invention relates to a delivery confirmation system, a portable terminal, and a computer program product.

### 2. Description of Related Art

As proof of receipt by the recipient of a shipment, a form which contains the recipient's addresses and is signed by the recipient or stamped with the recipients' seal has been conventionally used. However, the authenticity of the information contained in the proof of receipt is not high. In addition, it is difficult to authenticate delivery time period, location, and recipient's sign or seal on the form.

For example, Japanese Patent Laid-Open No. 2003-263647 describes a technique that attaches a digital signature, a digital certificate, and an image of a user's handwritten signature to an electronic document to send.

In the technique described in Japanese Patent Laid-Open No. 2003-263647, a digital signature is made on the body of an electronic document, and an image of the user's handwritten signature is added to the electronic document. Accordingly, it can be verified whether the electronic document has not been tampered with. With the image of the user's handwritten signature, a recipient can receive the electronic document in much the same way when the recipient receives a document with a conventional handwritten signature or seal.

However, the technique described in Japanese Patent Laid-Open No. 2003-263647 does not allow the recipient to make sure that the image of the handwriting has not been tampered with, because the digital signature confirms only the body of the electronic document. Furthermore, the location and time at which the electronic document has been prepared cannot be certified. Therefore, if the technique described in Japanese Patent Laid-Open No. 2003-263647 is applied to proof of receipt of a shipment and a digital signature and an image of handwriting of the recipient are attached to an electronic form, the time and location of delivery of the shipment cannot be certificated by the digital signature and the image of the handwriting and the authenticity of the image of the signature handwritten by the recipient cannot be verified.

### SUMMARY OF THE INVENTION

It is, therefore, a main object of the present invention to provide a delivery confirmation system that enables the delivery time period, the delivery location, and the recipient of a shipment to be confirmed by using electronic form data whose authenticity is ensured.

According to a first aspect of the present invention, there is provided a portable terminal connected to a server. The portable terminal includes: a communication section to send and receive data to and from the server; a time obtaining section to obtain current time; a location obtaining section to obtain a current location of the portable terminal; an input section to input receipt confirmation information indicating that a recipient of a shipment has received the shipment; and a control section to cause a digital signature to be attached to electronic form data, and to cause the communication section to send the electronic form data with the digital signature to the server, the electronic form data including the receipt confirmation information input through the input section when the shipment is received, the current time obtained by the time obtaining section when the shipment is received, and the current location obtained by the location obtaining section when the shipment is received.

According to a second aspect of the present invention, there is provided a computer program product readable by a computer and encoding instructions for executing a computer process, the computer being used for a portable terminal connected to a server. The computer process includes:
sending and receiving data to and from the server by a communication unit; obtaining current time by a timer unit; obtaining a current location of the portable terminal from GPS; inputting receipt confirmation information indicating that a recipient of a shipment has received the shipment; and causing a digital signature to be attached to electronic form data, and causing the communication unit to send the electronic form data with the digital signature to the server, the electronic form data including the receipt confirmation information when the shipment is received, the current time obtained by the timer unit when the shipment is received, and the current location when the shipment is received.

According to the present invention, there can be provided a delivery confirmation system that enables the delivery time period, delivery location, and the recipient of a shipment to be confirmed by using electronic form data whose authenticity is ensured.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a system configuration diagram generally illustrating an exemplary configuration of a delivery confirmation system according to an embodiment of the present invention;
FIG. 2 is a block diagram illustrating a functional configuration of a management server depicted in FIG. 1;
FIG. 3 is a diagram illustrating an exemplary data structure of electronic form information stored in a database depicted in FIG. 2;
FIG. 4 is a block diagram illustrating a functional configuration of a collection portable terminal and a delivery portable terminal depicted in FIG. 1;
FIG. 5 is a flowchart of a server certificate acquiring process performed by the management server in FIG. 1 and a server of a certificate authority;
FIG. 6 is a flowchart of a terminal certificate acquiring process performed by the collection portable terminal (delivery portable terminal) depicted in FIG. 1 and a server of the certificate authority;
FIG. 7A is a diagram illustrating a process flow in the entire delivery confirmation system depicted in FIG. 1;
FIG. 7B is a diagram illustrating the process flow in the entire delivery confirmation system depicted in FIG. 1;
FIG. 8 is a flowchart of a shipping order registration process performed by a CPU of a Web server depicted in FIG. 1;
FIG. 9 is a diagram illustrating an exemplary shipping order registration page displayed on a display section of a sender's personal computer (PC) depicted in FIG. 1;
FIG. 10 is a flowchart of a collection form data preparation process performed by a CPU of the management server depicted in FIG. 1;
FIG. 11 is a flowchart of a collection form data download process performed by a CPU of the collection portable terminal depicted in FIG. 1;
FIG. 12A is a flowchart of a collection confirmation input process performed by the CPU of the collection portable terminal depicted in FIG. 1;
FIG. 12B is a flowchart of the collection confirmation input process performed by the CPU of the collection portable terminal depicted in FIG. 1;
FIG. 13 is a diagram illustrating an exemplary collection form screen displayed on the collection portable terminal and the delivery portable terminal depicted in FIG. 1;
FIG. 14 is a diagram illustrating an exemplary collection confirmation signature screen displayed on the collection portable terminal depicted in FIG. 1;
FIG. 15 is a flowchart of a digital signing process performed by the CPU of the collection portable terminal and the delivery portable terminal depicted in FIG. 1;
FIG. 16 is a diagram illustrating an exemplary collection form printed on the collection portable terminal depicted in FIG. 1;
FIG. 17 is a flowchart of a collection form data upload process performed by the CPU of the collection portable terminal depicted in FIG. 1;
FIG. 18A is a flowchart of a collection form verification process performed by the CPU of the management server depicted in FIG. 1;
FIG. 18B is a flowchart of the collection verification process performed by the CPU of the management server depicted in FIG. 1;
FIG. 19 is a flowchart of a digitally signed data verification process performed by the CPU of the management server depicted in FIG. 1;
FIG. 20 is a flowchart of a delivery form data preparation process performed by the CPU of the management server depicted in FIG. 1;
FIG. 21 is a flowchart of a delivery form data download process performed by the CPU of the delivery portable terminal depicted in FIG. 1;
FIG. 22 is a flowchart of a delivered shipment confirmation process performed by the CPU of the delivery portable terminal depicted in FIG. 1;
FIG. 23A is a flowchart of a delivery confirmation input process performed by the CPU of the delivery portable terminal depicted in FIG. 1;
FIG. 23B is a flowchart of the delivery confirmation input process performed by the CPU of the delivery portable terminal depicted in FIG. 1;
FIG. 24 is a diagram illustrating an exemplary collection confirmation signature screen displayed on the display section of the delivery portable terminal depicted in FIG. 1;
FIG. 25 is a diagram illustrating an exemplary receipt confirmation signature screen displayed on the display section of the delivery portable terminal depicted in FIG. 1;
FIG. 26 is a flowchart of a delivery form data upload process performed by the CPU of the delivery portable terminal depicted in FIG. 1;
FIG. 27 is a flowchart of a delivery form verification process performed by the CPU of the management server depicted in FIG. 1;
FIG. 28 is a flowchart of a shipping status tracking page providing process performed by the CPU of the Web server depicted in FIG. 1;
FIG. 29 is a diagram illustrating an exemplary first shipping status tracking page displayed on the sender's PC or the recipient's PC depicted in FIG. 1;
FIG. 30 is a diagram illustrating an exemplary second shipping status tracking page displayed on the sender's PC or the recipient's PC depicted in FIG. 1; and
FIG. 31 is a block diagram illustrating a configuration of a Web server depicted in FIG. 1.

### DESCRIPTION OF THE PREFERRED EMBODIMENTS

An embodiment of the present invention will be described with reference to the accompanying drawings. Configurations of the embodiment will be described first.

### (Configuration of delivery confirmation system 100)

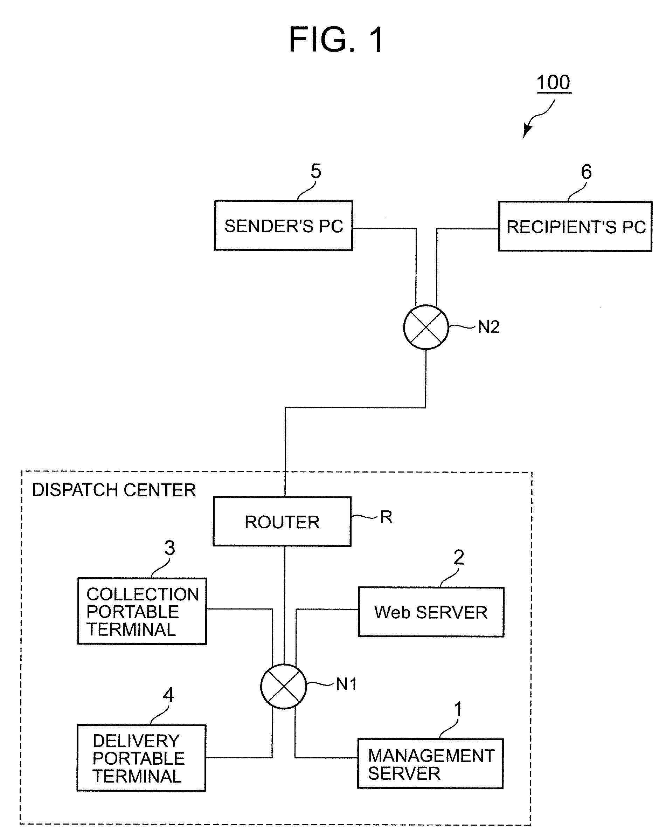

FIG. 1 is a block diagram illustrating a general configuration of a delivery confirmation system 100 according to an embodiment of the present invention. As illustrated in FIG. 1, the delivery confirmation system 100 includes a management server 1, a World Wide Web (Web) server 2, a collection portable terminal 3, a delivery portable terminal 4, a sender's personal computer (PC) 5, and a recipient's PC 6.

The management server 1 and the Web server 2 are provided in a dispatch center and are interconnected through a corporate network N1 such as a Local Area Network (LAN) so that data can be sent and received between them. The corporate network N1 is connected onto the Internet N2 through a router R or the like. The management server 1 and the Web server 2 are capable of sending and receiving data to and from the sender's PC 5, the recipient's PC 6, and a certificate authority's server (not shown) through the Internet N2. In order to ensure security, the management server 1 preferably sends and receives data to and from devices on the Internet N2 through a firewall.

The collection portable terminal 3 and the delivery portable terminal 4 are carried by a pickup person who collects shipments from senders and a delivery person who delivers shipments to recipients, respectively. The collection portable terminal 3 and the delivery portable terminal 4 are disconnected from the corporate network N1 during collection and delivery. When the pickup person or the delivery person comes back to the dispatch center, the collection or delivery portable terminals 3 and 4 can be connected to the corporate network N1 through cradles (not shown) or the like. No restrictions are put on the number of the collection portable terminals 3, the number of the delivery portable terminals 4, the number of the senders' PCs 5, and the number of the recipients' PCs 6.

### (Configuration of management server 1)

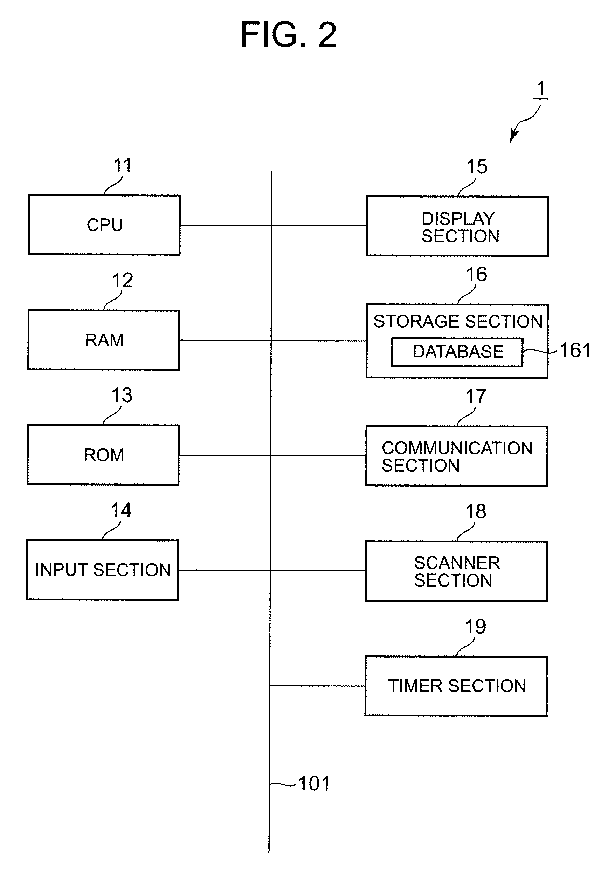

FIG. 2 is a block diagram illustrating a functional configuration of the management server 1. As illustrated in FIG. 2, the management server 1 includes a CPU 11, a Random Access Memory (RAM) 12, a Read Only Memory (ROM) 13, an input section 14, a display section 15, a storage section 16, a communication section 17, a scanner section 18, and a timer section 19, which are interconnected through a bus 101.

The CPU 11 reads out a system program stored in the ROM 13, loads the system program into a work area provided on the RAM 12, and controls the components of the management server 1 according to the system program. The CPU 11 also reads various processing programs from the ROM 13, loads the programs in a work area, and executes various processes, including a collection form verification process and a delivery form verification process, which will be described later.

The RAM 12 temporarily stores various programs read by the CPU 11 from the ROM 13, input data or output data, and parameters.

The ROM 13 stores the system program to be executed by the CPU 11, programs for executing various processes, and data required for execution of the programs. The programs are stored in the ROM 13 in the form of computer-readable program codes. The CPU 11 sequentially performs operation according to the program codes.

The input section 14 includes a keyboard including cursor keys, numeric keys, various function keys, and other keys and a pointing device such as a mouse and outputs an instruction signal input by key operation on the keyboard and mouse operation to the CPU 11.

The display section 15 is implemented by a display such as a Liquid Crystal Display (LCD), a Cathode Ray Tube (CRT), or an organic Electro-Luminescence (EL) display, and displays various screens according to instructions indicated by display signals provided from the CPU 11.

The storage section 16 is implemented by a Hard Disk Drive (HDD) or the like. The storage section 16 contains a database 161. The database 161 contains electronic form information for use in the delivery confirmation system 100.

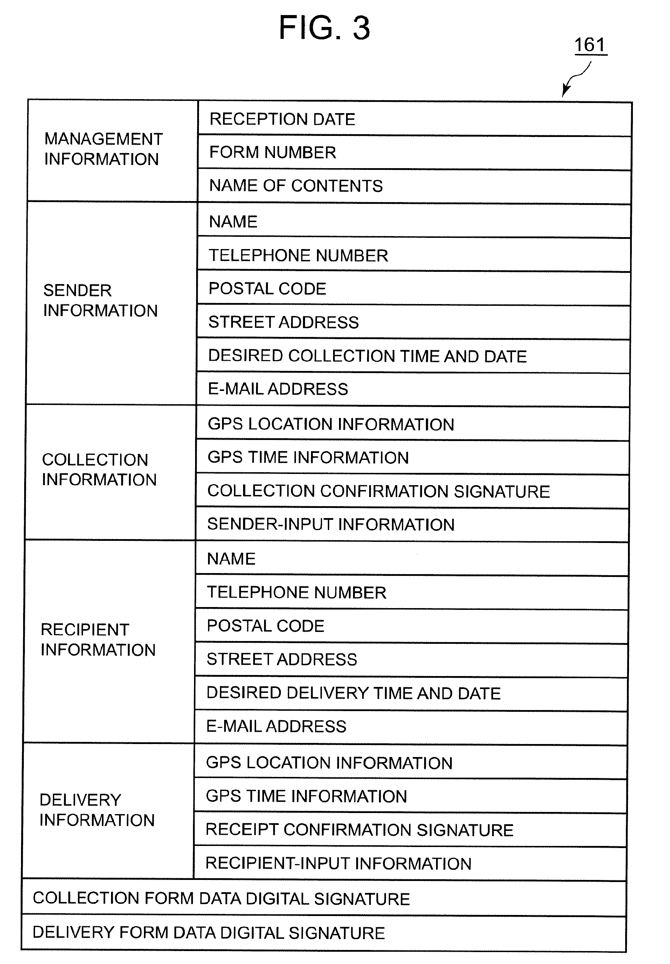

FIG. 3 illustrates an exemplary data structure of a record (electronic form information) stored in the database 161. As shown in FIG. 3, each record stored in the database 161 includes information such as management information, sender information, collection information, recipient information, delivery information, a collection form data digital signature, and a delivery form data digital signature.

The management information includes a reception date, a form number, and a name of contents. The reception date is the date on which the shipping order has been received from the sender. The form number is the number uniquely assigned to the order of shipping of the shipment placed by the sender. The name of contents is the description of the contents of the shipment to ship. The term "shipping" as used herein refers to both collection and delivery of a shipment.

The sender information includes the name of the sender, telephone number, postal code, street address, desired collection time and date, e-mail address of the sender.

The collection information includes GPS location information, GPS time information, a collection confirmation signature, and sender-input information. The GPS location information is obtained using the Global Positioning System (GPS) during collection of the shipment and indicates the location in which the shipment has been actually collected. The GPS time information is obtained using the GPS during collection of the shipment and indicates the time at which the shipment has been actually collected. The collection confirmation signature is collection confirmation information input by the sender during collection of the shipment and indicates that the sender has confirmed the collection. The sender-input information is any information input by the sender during the collection of the shipment.

The recipient information includes information such as the name of the recipient of the shipment, telephone number, postal code, street address, desired delivery time and date, and e-mail address of the recipient.

The delivery information includes GPS location information, GPS time information, a receipt confirmation signature, and recipient-input information. The GPS location information is obtained using the GPS when the shipment has been delivered (handed over) and indicates the location where the shipment has been actually delivered (handed over to the recipient). The GPS time information is time information obtained using the GPS when the shipment has been delivered (handed over) and indicates the time at which the shipment has been actually delivered (handed over to the recipient). The receipt confirmation signature is receipt confirmation information input by the recipient when the shipment has been delivered and indicates that the shipment has been received by the recipient. The recipient-input information is any information input by the recipient when the shipment has been delivered.

The collection form data digital signature is digital signature data attached to electronic form data for collection (hereinafter referred to as collection form data) on the collection portable terminal 3.

The delivery form data digital signature is digital signature data attached to electronic form data for delivery (hereinafter referred to as delivery form data) on the delivery portable terminal 4.

Returning to FIG. 2, the communication section 17 is implemented by a modem, a router, or a terminal adapter (TA) and controls sending and receiving of data to and from external devices such as the Web server 2, the collection portable terminal 3, the delivery portable terminal 4, and the sender's PC 5 through the corporate network N1 and the Internet N2.

The scanner section 18 includes a barcode reader or a barcode scanner which reads a barcode provided on a form such as a collection form.

The timer section 19 is implemented by a real time clock (RTC) or the like, keeps track of current time and date, and outputs the current time and date to the CPU 11.

### (Configuration of Web server 2)

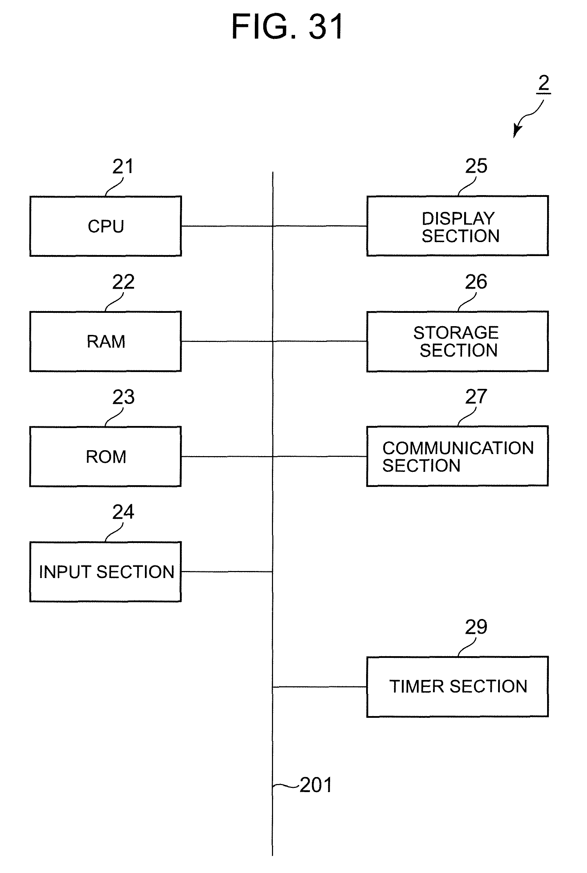

FIG. 31 is a block diagram illustrating a configuration of the Web server 2. As shown in FIG. 31, the Web server 2 includes a CPU 21, a RAM 22, a ROM 23, an input section 24, a display section 25, a storage section 26, a communication section 27, and a timer section 29, which are interconnected though a bus 201.

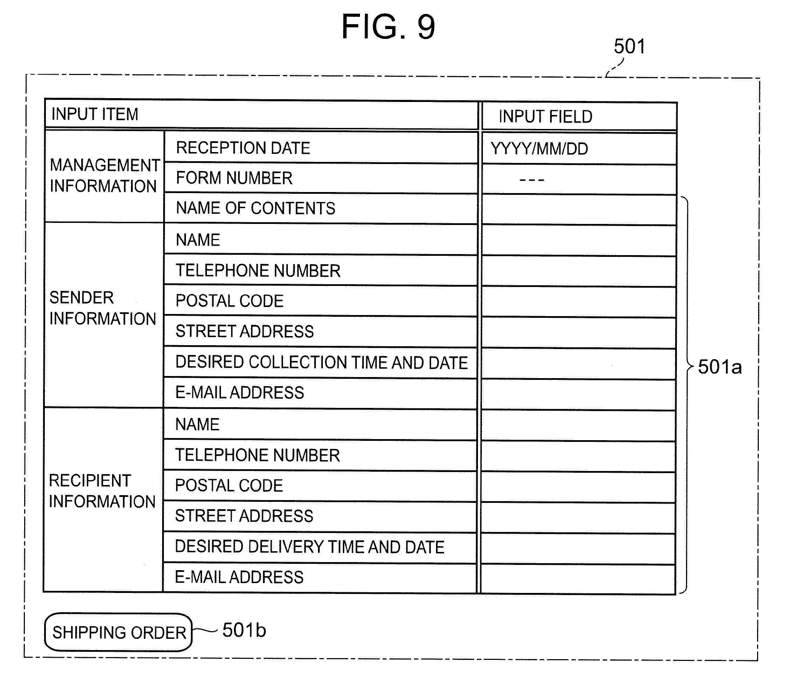

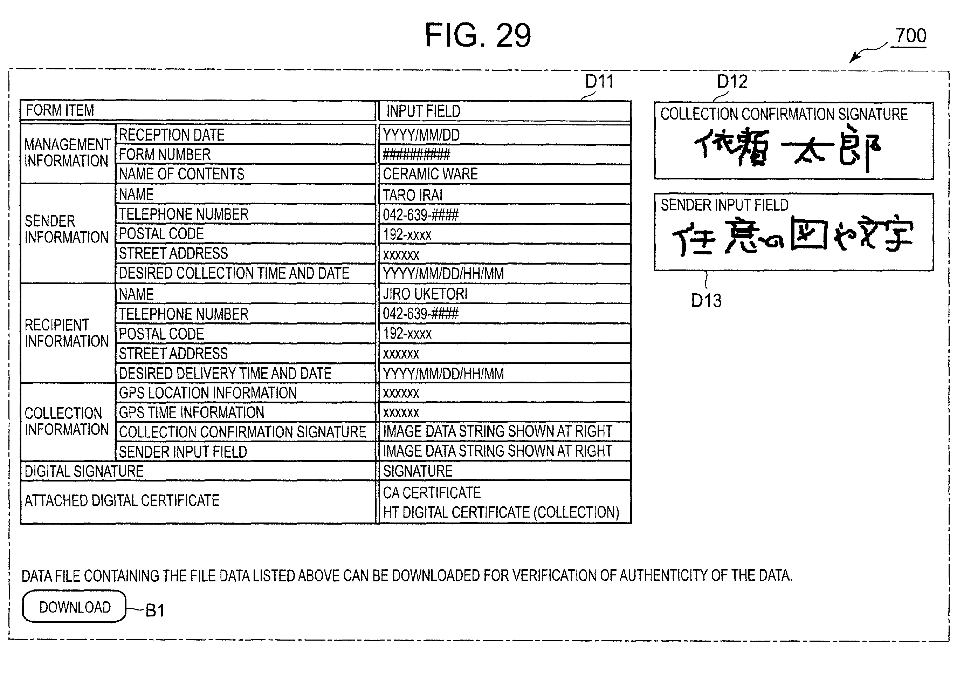

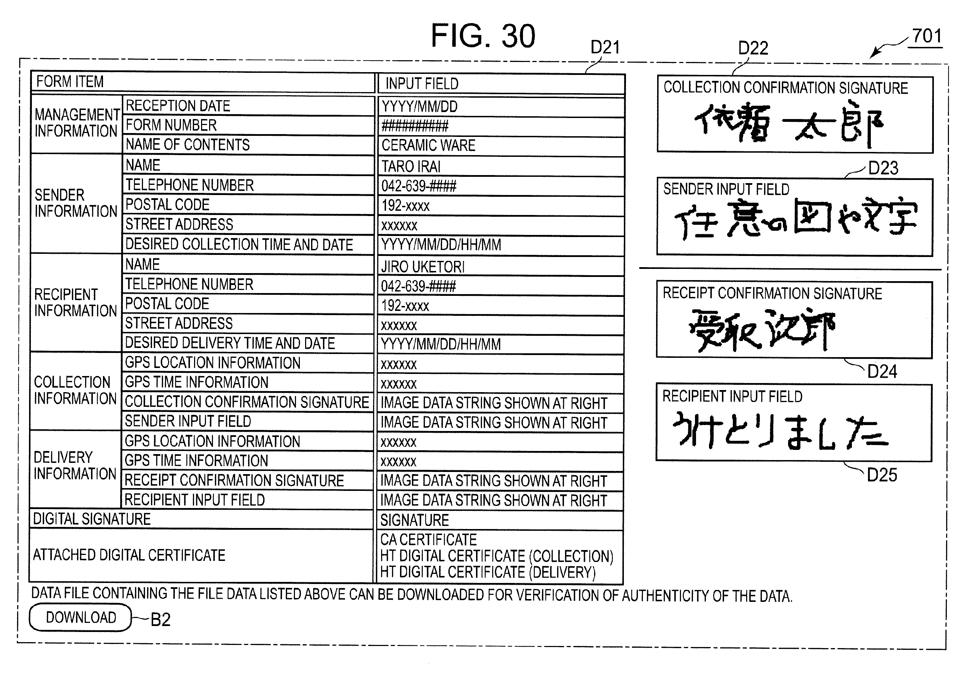

The ROM 23 stores a system program to be executed by the CPU 21, programs for implementing functions of the Web server, and programs for executing processes, including a shipping order registration process and a shipping status tracking page providing process. The storage section 26 stores various kinds of page data (such as HyperText Markup Language (HTML) files) for displaying Web pages such as a shipping order registration page. The CPU 21 executes processes, including the shipping order registration process and the shipping status tracking page providing process in accordance with the programs stored in the ROM 23 to provide Web pages such as a shipping order registration page (see FIG. 9) and a shipping status tracking page (see FIGS. 29 and 30) on the Internet.

The other components are similar to those described with respect to the management server 1 and therefore repeated description of the components will be omitted.

### (Configuration of collection and delivery portable terminals 3 and 4)

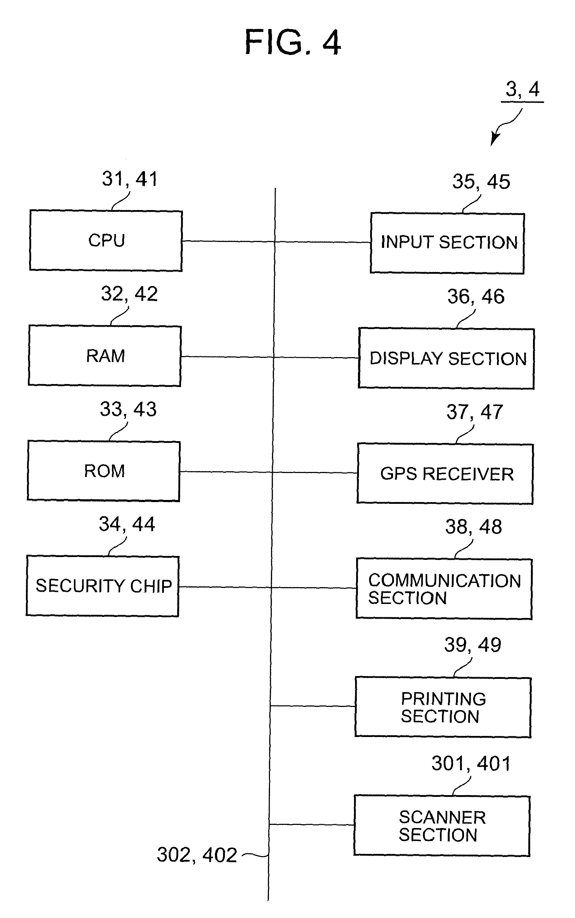

FIG. 4 is a block diagram illustrating a functional configuration of the collection portable terminal 3 and the delivery portable terminal 4.

As illustrated in FIG. 4, the collection portable terminal 3 includes a CPU 31, a RAM 32, a ROM 33, a security chip 34, an input section 35, a display section 36, a GPS receiver 37, a communication section 38, a printing section 39, and a scanner section 301, which are interconnected through a bus 302. The delivery portable terminal 4 includes a CPU 41, a RAM 42, a ROM 43, a security chip 44, an input section 45, a display section 46, a GPS receiver 47, a communication section 48, a printing section 49, and a scanner section 401, which are interconnected through a bus 402.

As illustrated in FIG. 4, the collection portable terminal 3 and the delivery portable terminal 4 have an identical configuration. Therefore the components of collection portable terminal 3 will be described below and detailed description of the components of the delivery portable terminal 4 will be omitted.

The CPU 31 reads out a system program stored in the ROM 33, loads the system program in a work area provided on the RAM 32, and controls the components of the collection portable terminal 3 in accordance with the system program. The CPU 31 also reads various process programs stored in the ROM 33, loads the programs in a work area, and executes processes, including a collection confirmation input process, which will be described later.

The RAM 32 temporarily stores various programs, read by the CPU 31 from the ROM 33, input or output data, and parameters.

The ROM 33 stores the system program and various other programs executed by the CPU 31 and data required for executing the programs. The programs are stored in the ROM 33 in the form of computer-readable program codes. The CPU 31 sequentially performs operation according to the program codes.

The security chip 34 is a specialized device for generating and storing a private key and a public key. The security chip 34 is not accessible to external programs, ensuring the security of data saved inside the security chip 34. The security chip 34 attaches a digital signature to input data using the stored private key using public-key cryptography and outputs the data to the CPU 31.

The input section 35 includes a ten-key pad, cursor keys, power on/off keys, and function buttons and outputs an operation signal to the CPU 31 in response to a key or button depression signal. The function buttons include a collection form download button for instructing the collection portable terminal 3 to download collection form data from the management server 1 and a collection form upload button for instructing the collection portable terminal 3 to upload collection form data to the management server 1 (on the delivery portable terminal 4, a delivery form download button for instructing the delivery portable terminal 4 to download delivery form data from the management server 1 and a delivery form upload button for instructing the delivery portable terminal 4 to upload delivery form data to the management server 1).

The input section 35 includes a touch screen that covers the display screen of the display section 36 and detects the coordinates of a location tapped with a special stylus pen in accordance with a coordinate detection method such as an electromagnetic induction, magnetostriction, or pressure-sensitive method, and outputs the detected coordinates to the CPU 31 as a location signal.

The display section 36 is implemented by a display such as an LCD or an organic EL display and displays various screens in accordance with instructions of display signals input from the CPU 31.

The Global Positioning System (GPS) receiver 37 includes a GPS antenna, not shown. The GPS antenna receives GPS signals transmitted from a number of GPS satellites in low-earth orbit. The GPS antenna receives GPS signals from at least three GPS satellites, obtains the absolute current location (latitudes and longitude) of the collection portable terminal 3 and the current time on the basis of the received GPS signals, and outputs the current location and time to the CPU 31.

The communication section 38 is an interface for connecting to a cradle, not shown, on the corporate network N1 and sends and receives data to and from external devices such as the management server 1 and the Web server 2 connected to the corporate network N1 through the cradle.

### (Configuration of sender's PC 5 and recipient's PC 6)

Each of the sender's PC 5 and recipient's PC 6 is a computer terminal including a CPU, a RAM, a ROM, an input section, a display section, and a communication section (which are not shown) and has Web browser capability.

### (Generation of server and terminal certificates)

Operation of the delivery confirmation system 100 will be described below.

The operation of the delivery confirmation system 100 is based on the prerequisite that the management server 1, the collection portable terminal 3, and the delivery portable terminal 4 have acquired and stored their respective digital certificates certifying the authenticity of its own public key from a certificate authority (CA). The digital certificate of the management server 1 is referred to as server certificate, the digital certificates of the collection portable terminal 3 and the delivery portable terminal 4 are referred to as terminal certificates. The certificate authority has a digital certificate (referred to as CA certificate) which is officially certified by another certificate authority and certifies the authenticity of its own public key.

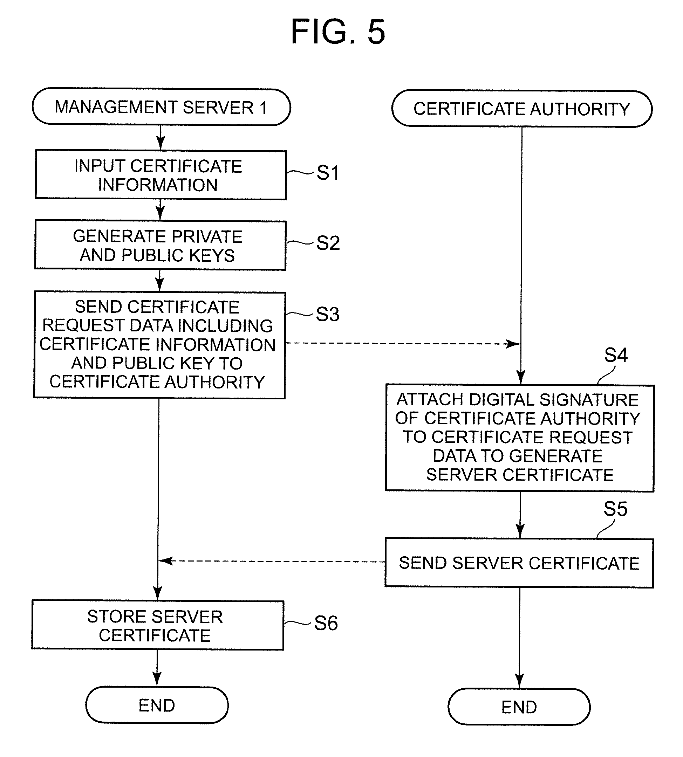

FIG. 5 is a flowchart illustrating a server certificate acquiring process performed by the management server 1 and the certificate authority's server (not shown). The process on the management server 1 is executed by the CPU 11 in cooperation with a program.

First, certificate information is input through the input section 14 (step S1). The certificate information is information required for applying for a digital certificate and includes information such as the corporation or organization name and the street address of the entity that owns the management server 1.

Then, private and public keys used for public-key cryptography are generated on the management server 1 (step S2). Then, certificate request data including the certificate information and the public key is sent to the certificate authority's server through the communication section 17 (step S3).

When the certificate request data sent from the management server 1 is received at the certificate authority's server, the certificate authority's server attaches the digital signature of the certificate authority to the received certificate request data, specifically the certificate information and the public key of the management server 1, to generate the server certificate for the management server 1 (step S4). The digital signature of the certificate authority is obtained by inputting the certificate request data into a hash function to calculate a hash value and encrypting the calculated hash value with the private key of the certificate authority. The server certificate is data including the certificate information and public key of the management server 1 and the digital signature of the certificate authority. If the value of the digital signature of the certificate authority decrypted with the public key of the certificate authority matches the hash value calculated by inputting the certificate information and public key of the management server 1 into the hash function, it means that the certificate authority certifies the certificate information and public key of the management server 1. The certificate authority verifies the validity of the certificate information and, if and only if it is valid, generates the server certificate.

When the server certificate is generated, the certificate authority sends the generated server certificate to the management server 1 (step S5).

The management server 1 receives the server certificate sent from the certificate authority's server through the communication section 17 and stores the server certificate in the storage section 16 (step S6).

The certificate authority's server stores the generated server certificate of the management server 1.
In response to a request for the terminal certificate from an external requester, the certificate authority's server sends the server certificate of the management server 1 to the external requester.

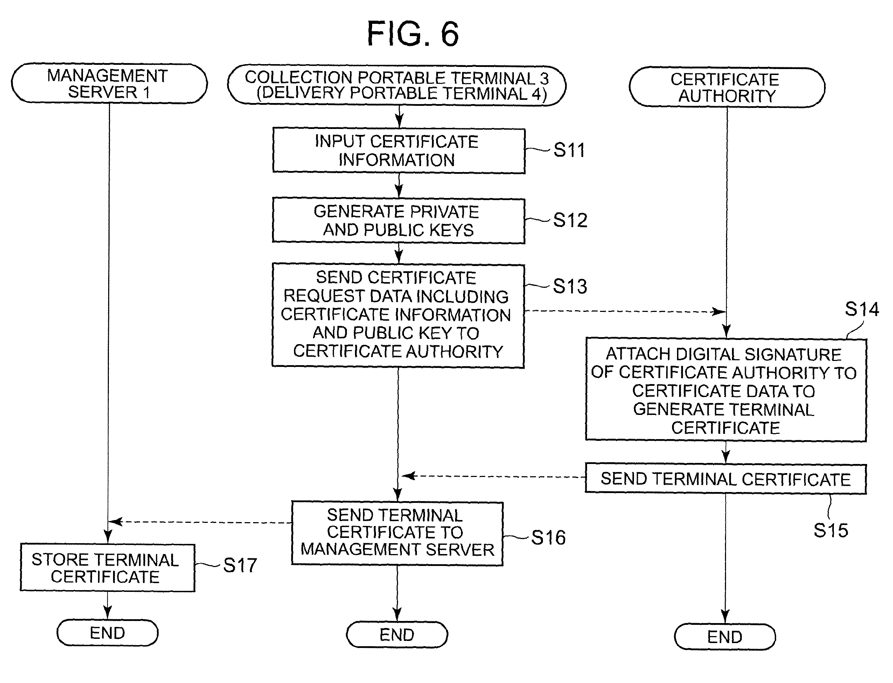

FIG. 6 is a flowchart illustrating a terminal certificate acquiring process performed by the collection portable terminal 3 or the delivery portable terminal 4 and the certificate authority's server.

The same process is also performed by the delivery portable terminal 4. The operation on the collection portable terminal 3 will be described and detailed description of operation on the delivery portable terminal 4 will be omitted. The operation on the collection portable terminal 3 (delivery portable terminal 4) is executed by the CPU 31 (CPU 41) in cooperation with a program.

First, certificate information is input through the input section 35 (step S11). The certificate information is information required for applying for a digital certificate and includes the company name or organization name of and street address the entity that owns the collection portable terminal 3.

Then, private and public keys used for public-key cryptography are generated by the security chip 34 and stored in the collection portable terminal 3 (step S12). Then certificate request data including the certificate information and the public key is sent to the certificate authority's sever through the communication section 38 (step S13).

When the certificate authority's server receives the certificate request data from the collection portable terminal 3, the certificate authority's server attaches the digital signature of the certificate authority to the received certificate request data, specifically the certificate information and the public key, to generate a terminal certificate for the collection portable terminal 3 (step S14). The digital signature of the certificate authority is obtained by inputting the certificate request data into a hash function to calculate a hash value and encrypting the calculated hash value with the private key of the certificate authority. The terminal certificate is data including the certificate information and public key (certificate request data) of the collection portable terminal 3 and the digital signature of the certificate authority. If the value of the digital signature of the certificate authority decrypted with the public key of the certificate authority matches the hash value calculated by inputting the certificate information and public key of the collection portable terminal 3 into the hash function, it means that the certificate authority certifies the certificate information and public key of the collection portable terminal 3. The certificate authority verifies the validity of the certificate information and, if and only if it is valid, generates the terminal certificate.

When the terminal certificate is generated, the certificate authority's server sends the generated terminal certificate to the collection portable terminal 3 (step S15).

When the collection portable terminal 3 receives the terminal certificate sent from the certificate authority's server through the communication section 38, the collection portable terminal 3 transfers the terminal certificate to the management server 1 through the communication section 38 (step S16).

When the management server 1 receives the terminal certificate sent from the collection portable terminal 3 through the communication section 17, the terminal certificate is associated and stored with the terminal ID of the collection portable terminal 3 in the storage section 16 (step S17).

The certificate authority's server stores the generated terminal certificate of the collection portable terminal 3. In response to a request for the terminal certificate from an external requester, the certificate authority's server sends the terminal certificate to the external requester.

### (Process flow between components of the delivery confirmation system 100)

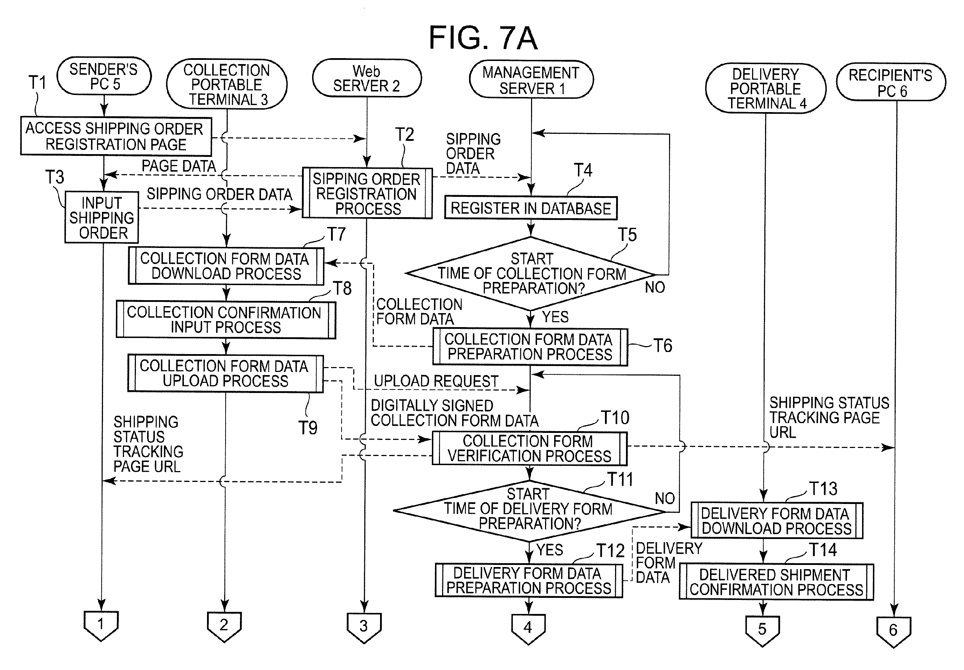

Processing performed by the components of the delivery confirmation system 100 in the process from the placement of shipping order by a sender to the delivery of the shipment to the recipient and the confirmation of the delivery will be described with reference to FIGS. 7A to 30.

FIGS. 7A to 7B illustrate a general process flow in the delivery confirmation system 100.

As illustrated in FIG. 7A, the Uniform Resource Locator (URL) of a shipping order registration page is accessed from the sender's PC 5 (step T1). The URL of the shipping order registration page is made available to the public.

When the URL of the shipping order registration page is accessed from the sender's PC 5, a shipping order registration process is started on the Web server 2 (step T2).

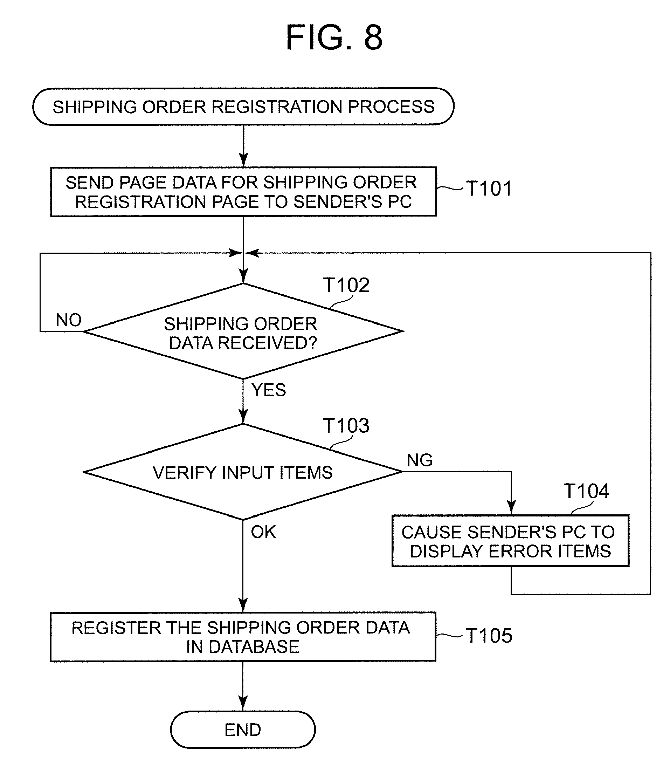

FIG. 8 is a flowchart of the shipping order registration process performed by the Web server 2 at step T2 of FIG. 7A. The shipping order registration process is executed by the CPU 21 in cooperation with a program stored in the ROM 23 in response to access to the URL of the shipping order registration page.

In the shipping order registration process, page data for displaying the shipping order registration page is first read from the storage section 26 and is sent to the sender's PC 5 through the communication section 27 (step T101).

When the page data for displaying the shipping order registration page is received at the sender's PC 5 from the Web server 2, the shipping order registration page 501 is displayed on the display section of the sender's PC 5 and a shipping order is input as illustrated in FIG. 7A (step T3 of FIG. 7A).

FIG. 9 is a diagram illustrating an exemplary shipping order registration page 501 displayed on the sender's PC 5. As illustrated in FIG. 9, the shipping order registration page 501 displays an input field 501a for inputting items such as a name of contents to ship, sender information, and recipient information, and a shipping order button 501b for instructing the sender's PC 5 to issue a shipping order according to the input information. When information is input in the input field 501a of the shipping order registration page 501 and the shipping order button 501b is pressed through the input section of the sender's PC 5 such as the keyboard or mouse, the input information (shipping order data) is sent to the Web server 2.

Returning to FIG. 8, when the shipping order data sent from the sender's PC 5 is received by the communication section 27 (YES at step T102), the input items contained in the shipping order data are verified (step T103). For example, verification is made as to whether there is an error item such as an item yet to be filled in or an item containing data of a wrong data type.

If there is an error item in the shipping order data (NG at step T103), instruction data is sent from the communication section 27 to the sender's PC 5 to display the error item and a prompt to re-input information (step T104) and the process returns to step T102. If there is no error item in the shipping order data (OK at step T103), the shipping order data is transferred through the communication section 27 to the management server 1 and new electronic form information is registered in the database 161 (step T105 of FIG. 8 and step T4 of FIG. 7A). Specifically, a new record is added to the database 161 in the management server 1, a form number is assigned to the record, and the name of contents, sender name, and recipient information in the shipping order data are entered in the new record. Then the shipping order registration process will end.

The Web server 2 performs the shipping order registration process each time the Web server 2 receives a request to access the shipping order registration page from the sender's PC 5.

When a predetermined time for initiating a collection form data preparation process is reached (YES at step T5 of FIG. 7A), the management server 1 starts the collection form data preparation process (step T6 of FIG. 7A) as illustrated in FIG. 7A.

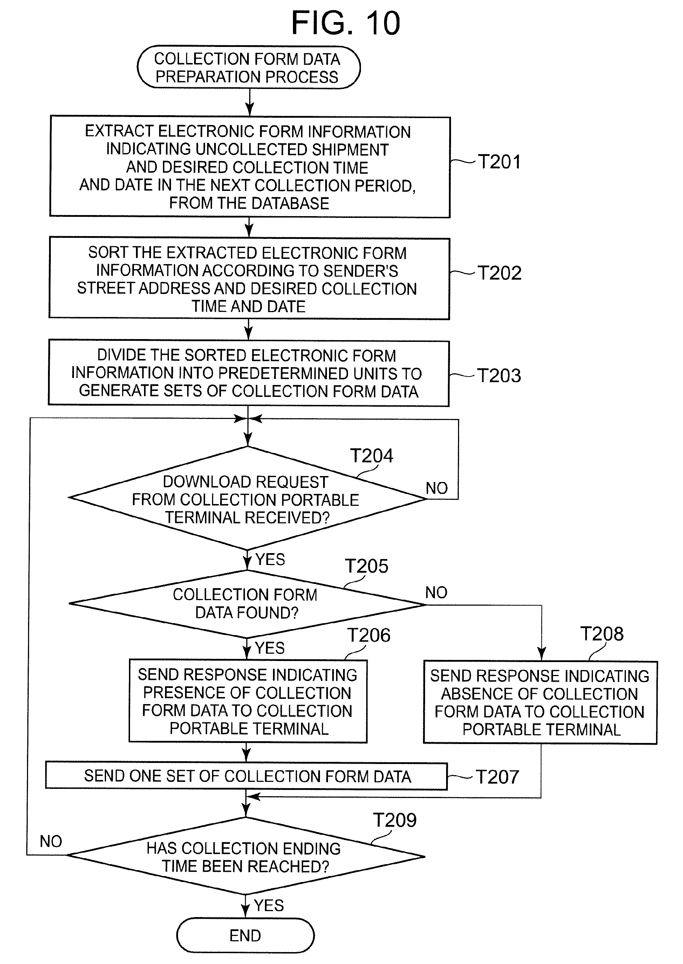

FIG. 10 is a flowchart of the collection form data preparation process executed by the CPU 11 of the management server 1 at step T6 of FIG. 7A. The collection form data preparation process is executed by the CPU 11 in cooperation with a program stored in the ROM 13.

Prestored in the ROM 13 are the collection form data preparation process start time, a collection time period (collection start time and ending time), the start time of a delivery form data preparation process, which will be described later, and a delivery time period (delivery start time and ending time). The collection form data preparation process is associated with shipment collection and is scheduled to be executed before the start of the collection. The delivery form data preparation process is associated with delivery and is scheduled to be executed before the start of the delivery. Collection and delivery is performed one or more times a day.

In the collection form data preparation process, electronic form sets of information (records) that indicates uncollected shipments and desired collection time and date in the next collection time period are extracted from the database 161 (step T201). Electronic form information indicating an uncollected shipment is specifically a record having a collection item with no data filled in.

Then, the extracted electronic form information is sorted according to the street address and the desired collection time and date in the sender information (step T202). The sorted electronic form information is divided into units, each of which is equivalent to the number of packets that can be collected by one pickup person, thereby generating sets of collection form data (step T203). The collection form data includes management information, sender information, recipient information, and collection information required for collection of shipments, out of the electronic form information. At this point of time, the items of collection information are blank so that data can be input later. The collection form data is temporarily stored in the RAM 12.

Then, the process waits for the collection portable terminal 3 to be connected (step T204).

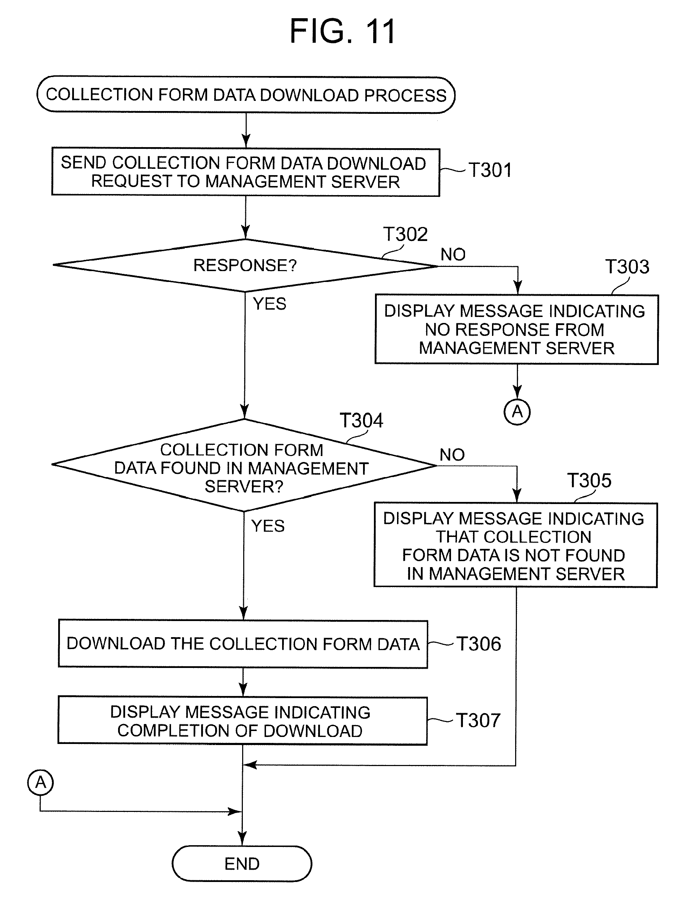

When the start of the collection time period is reached, the pickup person places the collection portable terminal 3 on a cradle, not shown, and presses a collection form download button. Then a collection form data download process (see FIG. 11) is started as illustrated in FIG. 7A (step T7 of FIG. 7A). The collection form data download process will be described later.

Returning to FIG. 8, when the download request from the collection portable terminal 3 is received at the communication section 17 (YES at step T204), reference is made to the RAM 12 to see whether there is collection form data (step T205). If it is determined that there is collection form data in the RAM 12 (YES at step T205), a response indicating the presence of the collection form data is sent to the collection portable terminal 3 through the communication section 17 (step T206) and a set of collection form data is read from the RAM 12 and sent to the collection portable terminal 3 through the communication section 17 (step T207). The process then proceeds to step T209. The collection form data sent is deleted from the RAM 12.

On the other hand, if it is determined that there is not collection form data in the RAM 12 (NO at step T205), a response indicating the absence of the collection form data is sent to the collection portable terminal 3 through the communication section 17 (step T208) and then the process proceeds to step T209.

At step T209, determination is made on the basis of the output from the timer section 19 as to whether the collection ending time has been reached. If it is determined that the collection ending time has not been reached (NO at step T209), the process returns to step T204. On the other hand, if it is determined that the collection ending time has been reached (YES at step T209), the collection form data preparation process will end.

FIG. 11 is a flowchart of a collection form data download process executed by the CPU 31 of the collection portable terminal 3 at step T7 of FIG. 7A. The collection form data download process is executed by the CPU 31 in cooperation with a program stored in the ROM 33.

First, a request to download collection form data is sent from the collection portable terminal 3 through the communication section 38 to the management server 1 (step T301).

Then, the process waits for a response from the management server 1. If a response from the management server 1 is not received at the communication section 38 for a period longer than a predetermined period of time (NO at step T302), an error message is displayed on the display section 36 indicating that no response has been sent form the management server 1 (step T303) and the collection form data download process will end. No response will be sent from the management server 1 for example when the management server 1 is not in operation because of some failure or the management server 1 has not executed the collection form preparation process.

When a response from the management server 1 is received at the communication section 38 (YES at step T302), determination is made on the basis of the received response as to whether there is collection form data in the management server 1 (step T304). If it is determined that there is not collection form data in the management server 1 (NO at step T304), a message is displayed on the display section 36 indicating that there is not collection form data in the management server 1 (step T305) and the collection form data download process will end.

On the other hand, if it is determined that there is collection form data in the management server 1 (YES at step T304), the collection form data sequentially sent from the management server 1 is downloaded through the communication section 38 and stored in the RAM 32 (step T306). Upon completion of the download, a message indicating the completion of download of the collection form data is displayed on the display section 36 (step T307) and then the collection form data download process will end.

After the completion of the collection form data download process, a collection confirmation input process is performed on the collection portable terminal 3 as illustrated in FIG. 7A (step T6 of FIG. 7A).

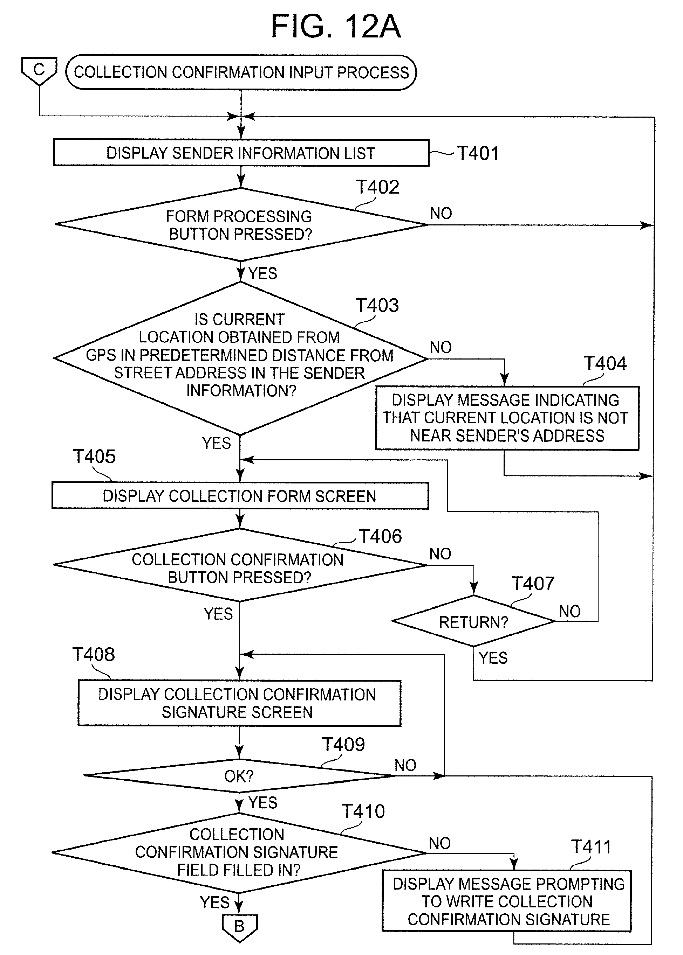

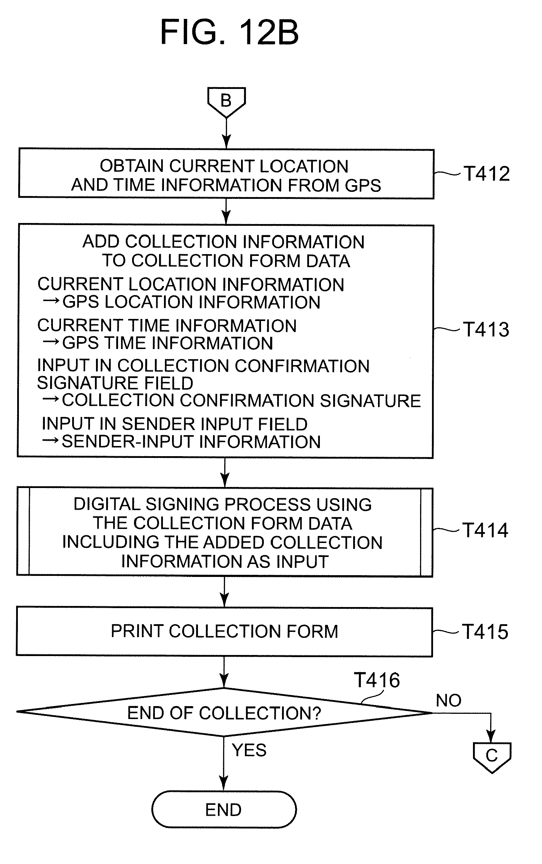

FIGS. 12A and 12B are flowcharts of the collection confirmation input process executed by the CPU 31 of the collection portable terminal 3 at step T6 of FIG. 7A. The collection confirmation input process is executed by the CPU 31 in cooperation with a program stored in the ROM 33.

First, a list of sender information is displayed on the display section 36 based on the downloaded collection form data (step T401 of FIG. 12A). The screen displayed at step T401 contains, in addition to the list of sender information in the collection form data, a form processing button for instructing the collection portable terminal 3 to perform form processing for collecting the shipment from a sender selected from the list.

When sender information is selected and the form processing button is pressed through the input section 35 (YES at step T402), current location information is obtained from the GPS receiver 37 and determination is made as to whether the current location is within a predetermined distance from the street address in the sender information (step T403). If it is determined that the current location obtained from the GPS receiver 37 is not within the predetermined distance from the street address in the sender information (NO at step T403), a message, for example "The address of the sender is not near your current location. Check the sender information.", is displayed indicating that the sender address is not near the current location (step T404) and then the process returns to step T401.

On the other hand, if it is determined that the current location obtained from the GPS receiver 37 is within the predetermined distance from the street address in the sender information (YES at step T403), a collection form screen 361 is displayed on the display section 36 (step T405).

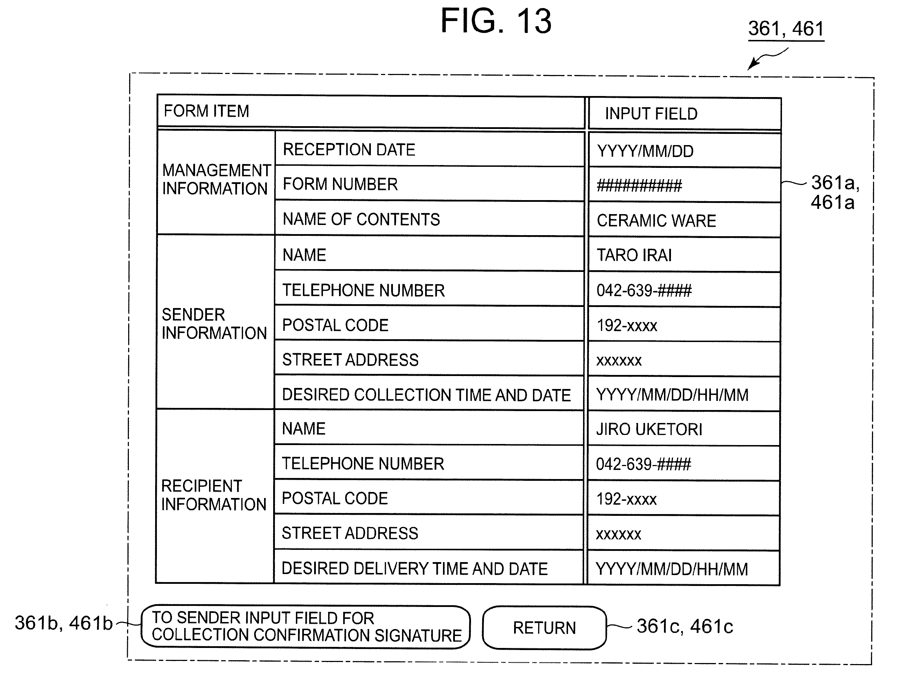

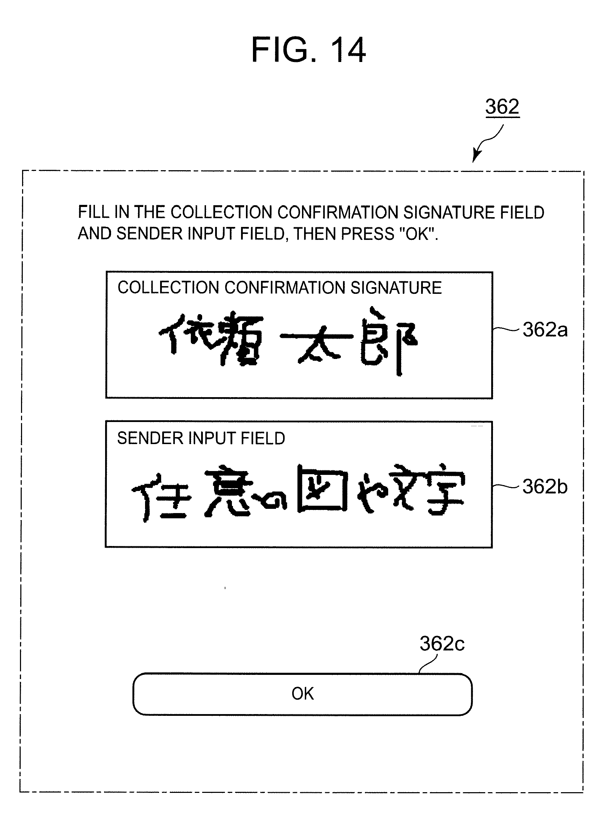

FIG. 13 illustrates an exemplary collection form screen 361 displayed at step T405. As depicted in FIG. 13, collection form data 361a, a collection confirmation button 361b, and a return button 361c are displayed on the collection form screen 361. The collection confirmation button 361b is used for instructing the collection portable terminal 3 to proceed to a collection confirmation signature screen 362 (see FIG. 14). The return button 361c is used for instructing the collection portable terminal 3 to return the display on the display section 36 to the sender information list screen. The pickup person shows the collection form screen 361 to the sender and asks the sender to check the collection form data to be sure that the data is correct. If no mistakes are found in the collection form data, the pickup person receives the shipment from the sender, presses the collection confirmation button 361b through the input section 35, and asks the sender to enter a confirmation signature.

If the collection confirmation button 361b on the collection form screen 361 is not pressed (NO at step T406 of FIG. 12A) but the return button 361c is pressed (YES at step T407), the process returns to step T401. When the collection confirmation button 361b on the collection form screen 361 is pressed (YES at step T406), a collection confirmation signature screen 362 is displayed on the display section 36 (step T408).

FIG. 14 illustrates an exemplary collection confirmation signature screen 362 displayed on the display section 36 at step T408. As depicted in FIG. 14, a collection confirmation signature field 362a, a sender input field 362b, and an OK button 362c are displayed on the collection confirmation signature screen 362. The collection confirmation signature field 362a is an area where the sender inputs a collection confirmation signature in handwriting with a stylus pen or the like. The sender input field 362b is an area where the sender optionally inputs any graphics or characters by hand. The OK button 362c is pressed after the input of information, including the signature, has been finished, in order to proceed to the next process.

When the OK button 362c in the collection confirmation signature screen 362 is pressed through the input section 35 (YES at step T409), determination is made as to whether an input has been made in the collection confirmation signature field 362a. If it is determined that no input has been made in the field (NO at step T410), a message prompting to enter a collection confirmation signature, for example "Signature has not been made on the collection confirmation signature field. Write your signature." is displayed on the display section 36 (step T411) and then the process returns to step T408.

If it is determined that an input has been made in the collection confirmation signature field 362a (YES at step T410), current location information and current time information are obtained from the GPS receiver 37 (step T412 of FIG. 12B), the obtained current location information and current time information are added to collection information in the collection form data as GPS location information and GPS time information, respectively, and the data input in the collection confirmation signature field 362a and data input in the sender input field 362b are added to the collection form data as the collection confirmation signature in the collection information and sender-input information, respectively (step T413).

Then, the collection form data to which the collection information has been added is used as input data to perform a digital signing process (step T414).

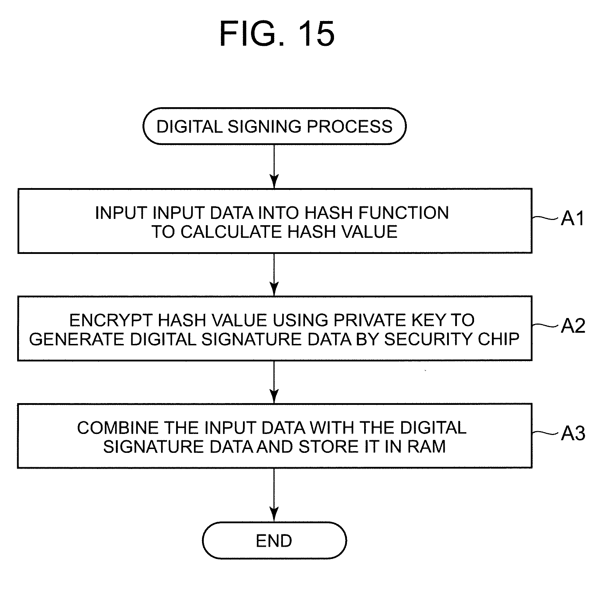

FIG. 15 is a flowchart of the digital signing process. The digital signing process is executed by the CPU 31 in cooperation with a program stored in the ROM 33.

First, a hash function is used to calculate a hash value from input data (here, the collection form data) (step A1).

Then, the hash value is transferred to the security chip 34, where the hash value is encrypted with the private key of the collection portable terminal 3 (step A2). The encrypted hash value is the digital signature data.

The input data is combined with the digital signature data and stored in the RAM 32 (step A3). Then the digital signing process will end.

The combination of the collection form data and the digital signature data is called digitally signed collection form data.

Returning to FIG. 12B, after the digital signing process has been completed, the collection form D is printed by the printing section 39 on the basis of the digitally signed collection form data (step T415).

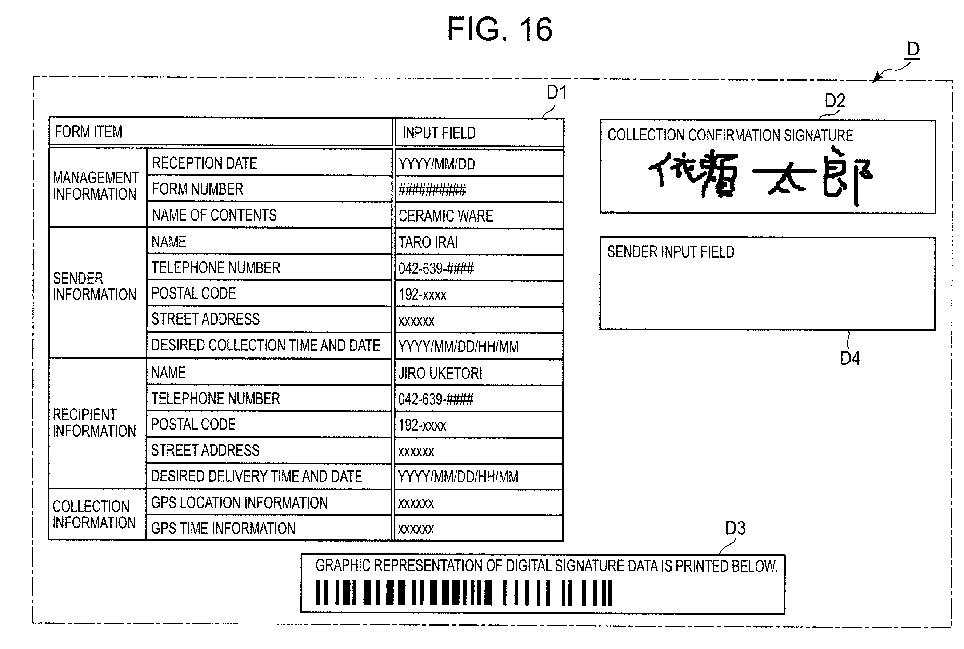

FIG. 16 illustrates an exemplary collection form D printed at step T415 of FIG. 12B. The collection form D contains collection form data D1, collection confirmation data D2, and a barcode image D3 representing digital signature data. Data in the sender input field optionally input by the sender during the collection is not printed on the collection form D. The collection form D is attached to the collected shipment.

Steps T401 to T415 are repeated until digitally signed collection form data is generated for all available collection form data or an instruction to end collection is input through the input section 35 to end the collection. When the collection ends (YES at step T416), the collection confirmation input process will end.

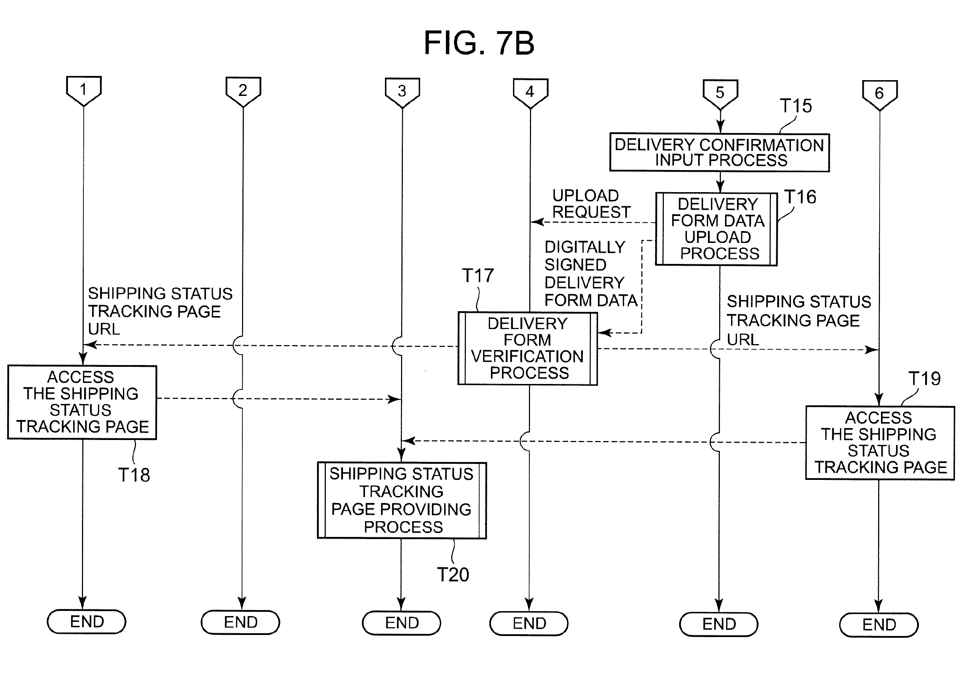

After the collection ends, the pickup person returns to the dispatch center with the collection portable terminal 3 and hands over the collected shipments to the dispatch center personnel. Then the pickup person places the collection portable terminal 3 on a cradle, not shown, and presses the collection form upload button on the input section 35. Upon depression of the collection form upload button on the collection portable terminal 3 placed on the cradle, a collection form data upload process is started as illustrated in FIG. 7 (step T9 of FIG. 7A).

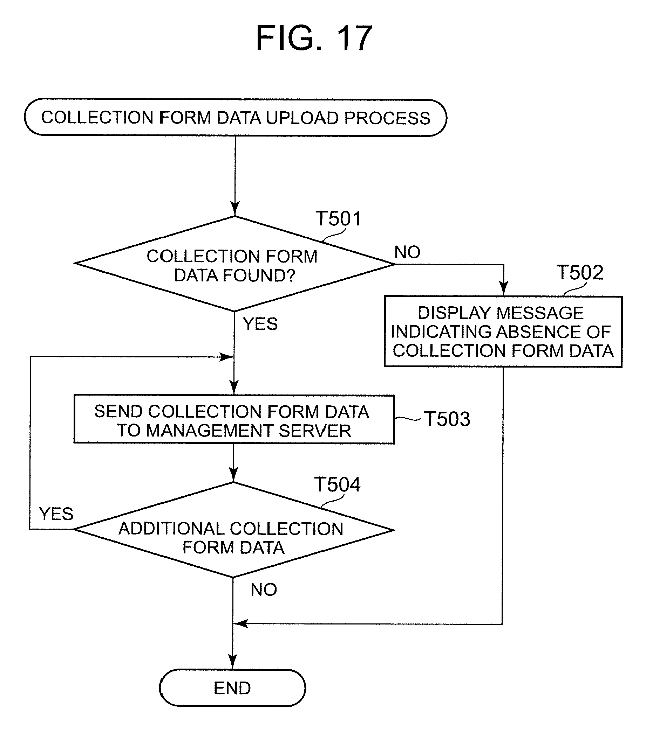

FIG. 17 is a flowchart of a collection form data upload process executed by the CPU 31 at step T9 of FIG. 7A. The collection form data upload process is executed by the CPU 31 in cooperation with a program stored in the ROM 33.

First, determination is made as to whether the RAM 32 contains collection form data (including digitally signed collection form data). If it is determined that the RAM 32 does not contain collection form data (NO at step T501), a message such as "NO collection form has been found" is displayed on the display section 36 indicating that there is not collection form data (step T502), and then the collection form data upload process will end.

If it is determined that the RAM 32 contains collection form data (YES at step T501), an upload request is sent through the communication section 38 to the management server 1 and the collection form data stored in the RAM 32 is sent to the management server 1 (step T503). The collection form data sent is then deleted from the RAM 32.

Then, determination is made as to whether the RAM 32 contains additional collection form data. If it is determined that the RAM 32 contains additional collection form data (YES at step T504), the process returns to step T503 and the next collection form data is sent through the communication section 38 to the management server 1. On the other hand, if it is determined that the RAM 32 does not contain collection form data (NO at step T504), the collection form data upload process will end.

When the upload request from the collection portable terminal 3 is received through the communication section 17 as illustrated in FIG. 7A, a collection form verification process is started in the management server 1 (step T10).

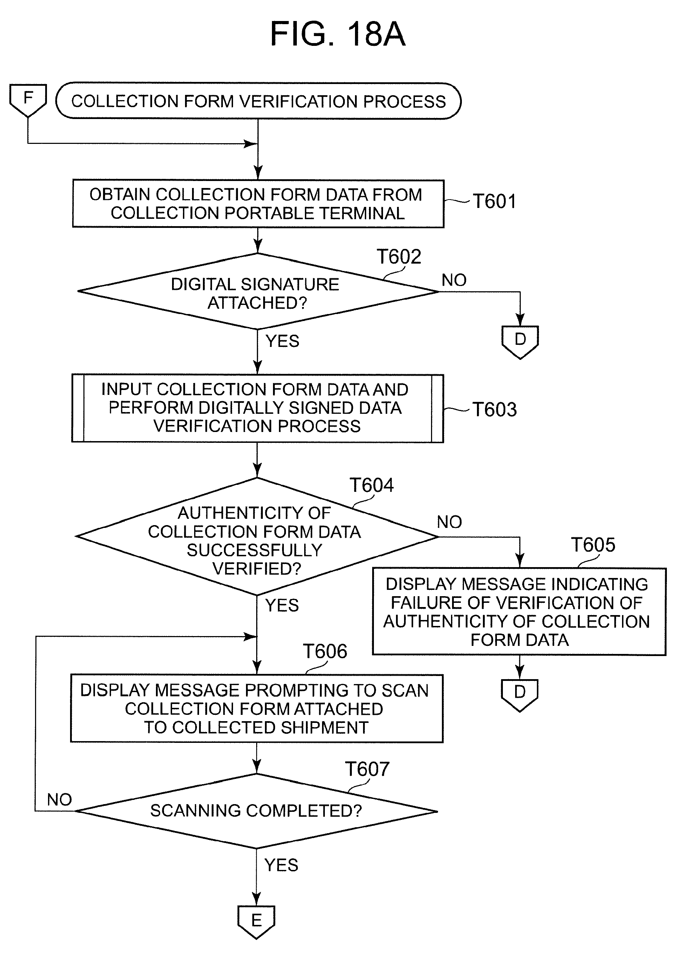

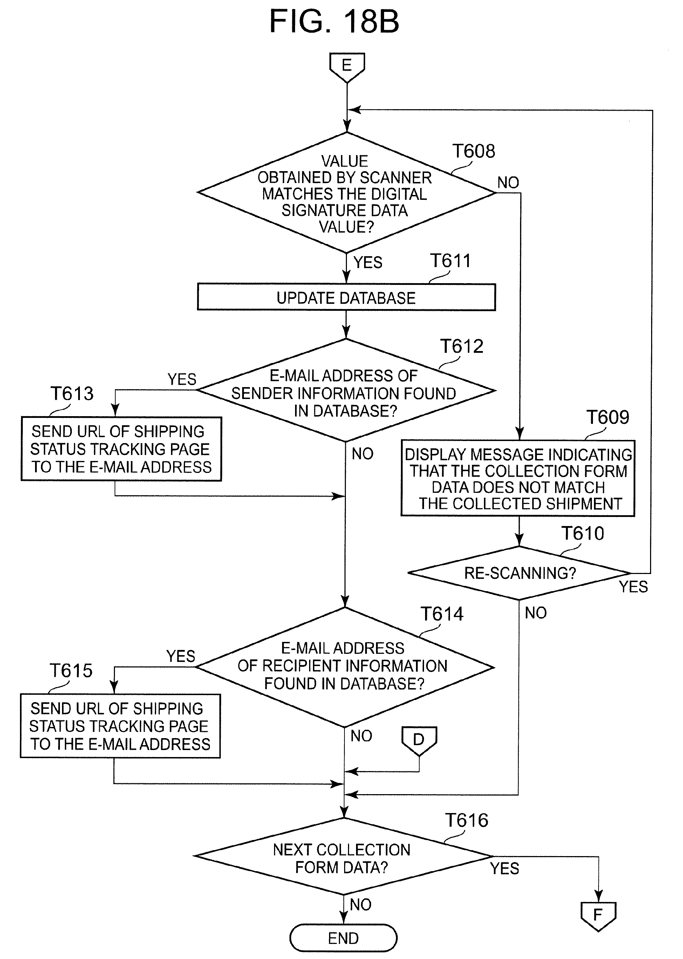

FIGS. 18A and 18B are flowcharts of the collection form verification process executed by the CPU 11 of the management server 1 at step T10 of FIG. 7A. The collection form verification process is executed by the CPU 11 in cooperation with a program stored in the ROM 13.

First, collection form data is obtained from the collection portable terminal 3 through the communication section 17 (step T601). Then, determination is made as to whether a digital signature is attached to the received collection form data. If it is determined that no digital signature is attached (NO at step T602), the process proceeds to step T616.

On the other hand, if it is determined that a digital signature is attached to the received collection form data (YES at step T602), a digitally signed data verification process is performed using the collection form data as input data (step T603).

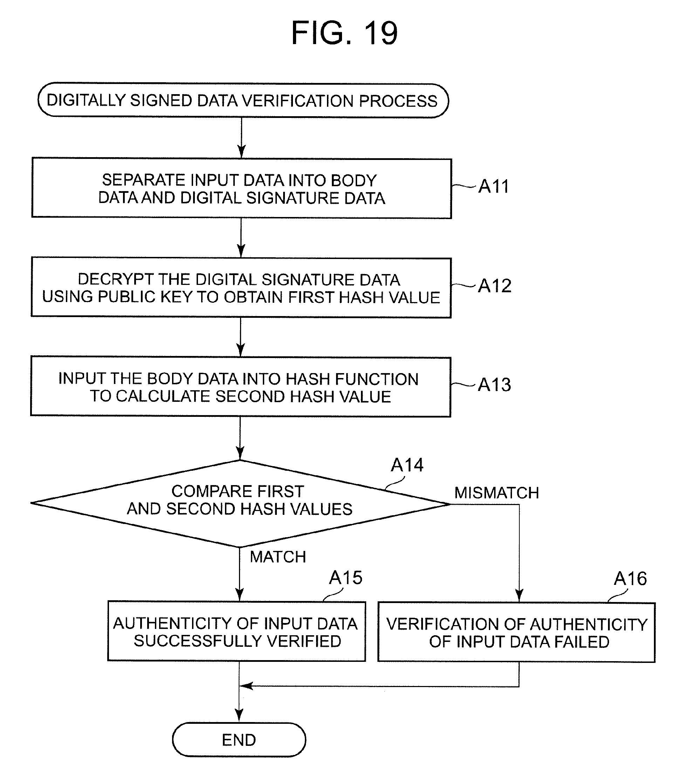

FIG. 19 is a flowchart of the digitally signed data verification process. The digitally signed data verification process is executed by the CPU 11 in cooperation with a program stored in the ROM 13.

First, the input data is separated into body data and digital signature data and both data are stored in the RAM 12 in association with each other (step A11).

Then, the digital signature data is decrypted with the public key of the collection portable terminal 3 to obtain a first hash value (step A12). As has been described earlier, the terminal certificate of the collection portable terminal 3 is stored in the storage section 16 and the public key is obtained from the terminal certificate.

The second body data is input into a hash function to calculate a second hash value (step A13). The first and second hash values are compared with each other (step S14).

If the first and second hash values match (YES at step A14), the result that the verification of the authenticity of the collection form data has been successful (which means that the collection form data is the same as it was when it was digitally signed, and has not been tampered with) is output (step A15), then the digitally signed data verification process will end. On the other hand, if the first and second hash values do not match (NO at step A14), failure of the verification of authenticity of the collection form data (which means that the collection form data is not the same as it was when it was digitally signed, and has been tampered with) is output (step A16) and then the digitally signed data verification process will end.

Returning to FIG. 18A, after completion of the digitally signed data verification process, determination is made on the basis of the result of the verification process as to whether the authenticity of the received collection form data has been successfully verified (step T604). If it is determined that the verification of the authenticity of the received collection form data has failed (NO at step T604), a message such as "Verification of the collection form data has failed." is displayed on the display section 15, indicating the failure of the verification of the authenticity of the collection form data (T605), then the process proceeds to step T616 of FIG. 18B.

On the other hand, if it is determined that the authenticity of the received collection form data has been successfully verified (YES at step T604), a message such as "Scan the collection form attached to the collected shipment No. xxx." is displayed to prompt the pickup person to scan the form attached to the collected shipment (step T606). When the collection form D has been scanned by the scanner section 18 (YES at step T607), determination is made as to whether the value obtained by the scanner section 18 matches the value of the digital signature data attached to the collection form data (step T608 of FIG. 18B). If the value obtained by the scanner section 18 matches the value of the digital signature data, it indicates that the collection form data matches the collected shipment. This proves that the digital signature data used for the verification of the collection form data has not been tampered with.

If it is determined that the value obtained by the scanner section 18 does not match the value of the digital signature data of the collection form data (NO at step T608), a message such as "The collected shipment and the collection form do not match." is displayed, indicating that the collection form data does not match the collected shipment (step T609). If, for example, the pickup person has mistakenly scanned the collection form D of a wrong shipment and then reattempts scanning the collection form D of a correct shipment using the scanner section 18 (YES at step T610), the process returns to step T608. If scanning is not reattempted (NO at step T610), the process proceeds to step T616.

If it is determined that the value obtained by the scanner section 18 matches the value of the digital signature data of the collection form data (YES at step T608), the database 161 is searched for a record with the form number that matches that of the received collection form data and the record found is updated with the received collection form data (step T611). Specifically, the management information, sender information, collection information, recipient information, and collection form data digital signature (the digital signature data of the collection form data) included in the received collection form data are written in the found record.

Determination is made as to whether the sender information in the record found includes an e-mail address and, if it does (YES at step T612), an e-mail for giving notice of the URL of a shipping status tracking page (see FIGS. 29 and 30) is generated and is sent to the e-mail address in the sender information through the communication section 17 (step T613), then the process proceeds to step T614. The shipping status tracking page is a Web page that allows the sender and the recipient to check the shipping status of the shipment. The URL includes for example information for identifying the storage location of the found record in the database 161. On the other hand, if it is determined that the recipient information in the found record does not include an e-mail address (No at step T612), the process proceeds to step T614.

At step T614, determination is made as to whether the recipient information in the found record contains the e-mail address and, if it does (YES at step T614), an e-mail for giving notice of the URL of the shipping status tracking page is generated and sent to the e-mail address of the recipient information through the communication section 17 (step T615), then process proceeds to step T616. On the other hand, if the recipient information in the found record does not contain the e-mail address (NO at step T614), the process proceeds to step T616.

At step T616, determination is made as to whether a request for transmission of the next collection form data has been received from the collection portable terminal 3 through the communication section 17 and, if it is determined that a request for transmission of the next collection form data has been received (YES at step T616), the process returns to step T601. On the other hand, if it is determined that a request for transmission of the next collection form data has not been received and the communication session with the portable terminal 3 has ended (NO at step T616) the collection form verification process will end.

The collection form verification process described above is performed each time an upload request is received from the collection portable terminal 3.

When predetermined start time of a delivery form data preparation process is reached (YES at step T11 of FIG. 7A), the delivery form data preparation process is executed on the management server 1 (step T12).

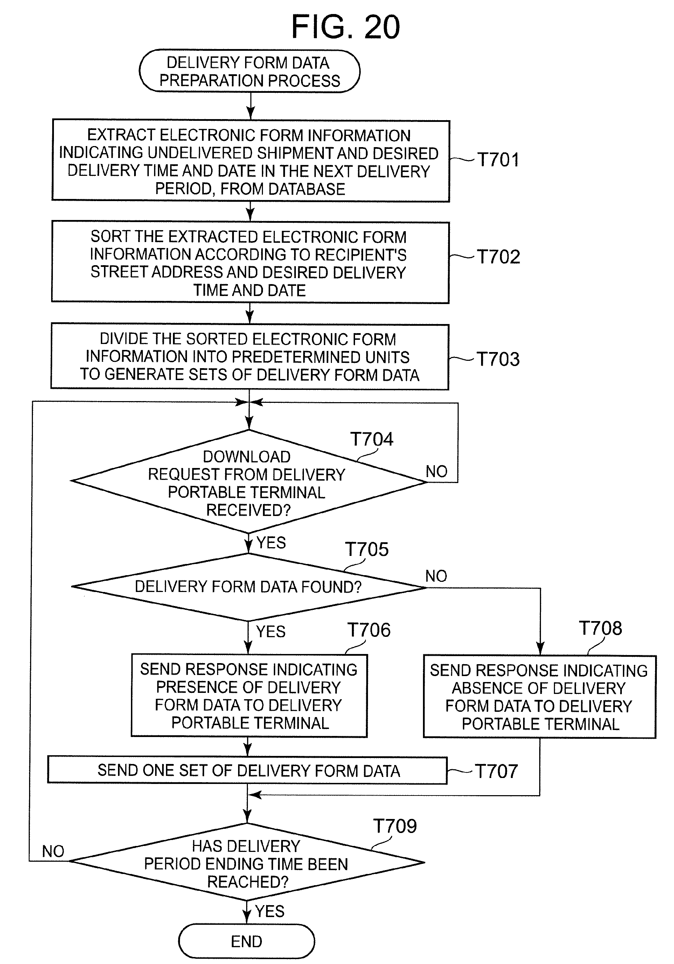

FIG. 20 is a flowchart of a delivery form data preparation process executed by the CPU 11 of the management server 1. The delivery form data preparation process is executed by the CPU 11 in cooperation with a program stored in the ROM 13.

In the delivery form data preparation process, electronic form information (a record) containing information that indicates an undelivered state and the desired delivery time and date that is in the next delivery time period is first extracted from the database 161 (step T701). Electronic form information indicating an undelivered state is a record that does not have data written in the delivery information fields.

Then, the extracted electronic form information is sorted according to the street address and desired delivery time and date in the recipient information (step T702), the sorted electronic form information is divided into units, each of which is equivalent to the number of shipments one pickup person can deliver, thereby generating sets of delivery form data (step T703). The delivery form data includes management information, sender information, recipient information, collection information, delivery information, and collection form data digital signature required to delivery, out of the digital form information. At this point of time, the items of delivery information are blank so that data can be input later.

Then, the process waits for the delivery portable terminal 4 to be connected.

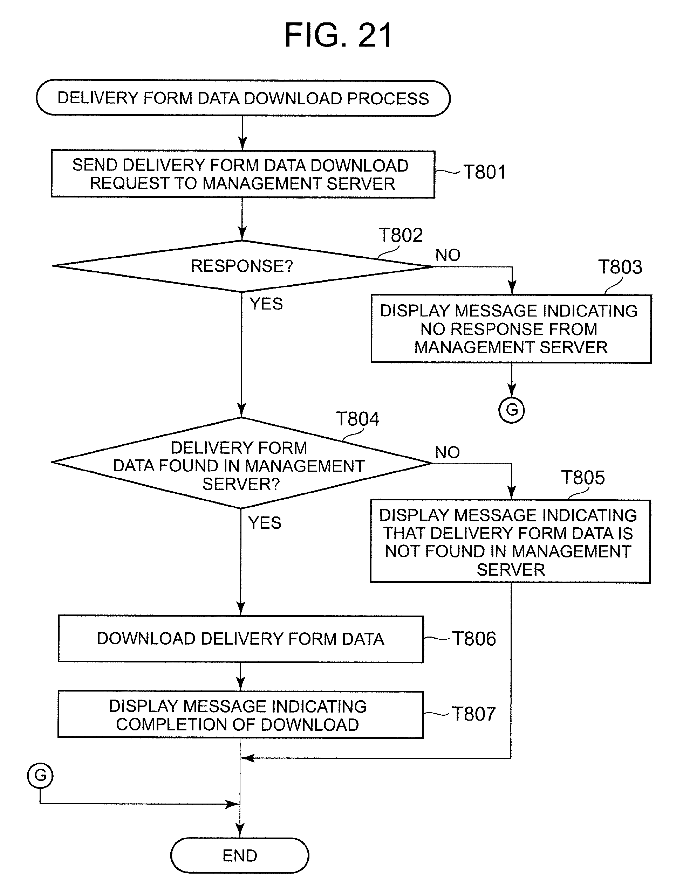

When the start time of the delivery time period is reached, the delivery person places the delivery portable terminal 4 on a cradle, not shown, and presses a delivery form download button. Then a delivery form data download process (see FIG. 21) is started as illustrated in FIG. 7A (step T13 of FIG. 7A). The delivery form data download process will be described later.

Returning to FIG. 20, when a download request from the delivery portable terminal 4 is received by communication section 17 (YES at step T704), reference is made to the RAM 12 to see whether there is delivery form data (step T705). If it is determined that there is delivery form data in the RAM 12 (YES at step T705), a response indicating the presence of the delivery form data is sent to the delivery portable terminal 4 through the communication section 17 (step T706) and a set of delivery form data is read from the RAM 12 and sent to the delivery portable terminal 4 through the communication section 17 (step T707). The process then proceeds to step T709. The delivery form data sent is deleted from the RAM 12.

On the other hand, if it is determined that there is not collection form data in the RAM 12 (NO at step T705), a response indicating the absence of the delivery form data is sent to the delivery portable terminal 4 through the communication section 17 (step T708), then the process proceeds to step T709.

At step T709, determination is made on the basis of an output from the timer section 19 as to whether the delivery period ending time has been reached and, if it is determined that the delivery period ending time has been reached (NO at step T709), the process returns to step T704. On the other hand, if it is determined that the delivery period ending time has not been reached (YES at step T709), the delivery form data preparation process will end.

FIG. 21 is a flowchart of a delivery form download process executed by the CPU 41 of the delivery portable terminal 4 at step T13 of FIG. 7A. The delivery form data download process is executed by the CPU 41 in cooperation with a program stored in the ROM 43.

First, a download request is sent to the management server 1 through the communication section 48 (step T801).

Then, the process waits for a response from the management server 1. If no response from the management server 1 is received at the communication section 48 for a period longer than a predetermined period of time (NO at step T802), an error message is displayed on the display section 46 indicating that no response has been returned from the management server 1 (step T803), then the delivery form data download process will end. No response will be sent from the management server 1 for example when the management server 1 is not in operation because of some failure or the management server 1 has not executed the delivery form data preparation process.

When a response from the management server 1 is received at the communication section 48 (YES at step T802), determination is made on the basis of the received response as to whether there is delivery form data in the management server 1 (step T804). If it is determined that there is not delivery form data in the management server 1 (NO at step T804), a message is displayed on the display section 46 indicating that there is not delivery form data in the management server 1 (step T805), then the delivery form data download process will end.

On the other hand, if it is determined that there is delivery form data in the management server 1 (YES at step T804), the delivery form data sequentially sent from the management server 1 is downloaded through the communication section 48 and is stored in the RAM 42 (step T806). Upon completion of the download, a message indicating the completion of download of the delivery form data is displayed on the display section 46 (step T807), then the delivery form data download process will end.

After the completion of the delivery form data download process, a delivered shipment confirmation process is performed on the delivery portable terminal 4 as illustrated in FIG. 7A (step T14 of FIG. 7A).

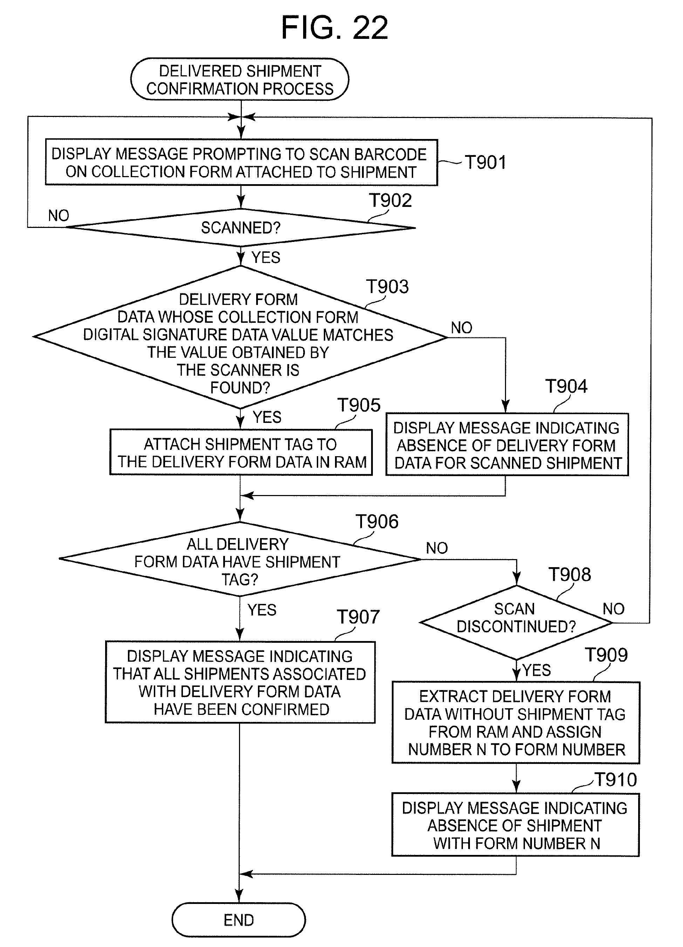

FIG. 22 is a flowchart of the delivered shipment confirmation process executed by the CPU 41 of the delivery portable terminal 4. The delivered shipment confirmation process is executed by the CPU 41 in cooperation with a program stored in the ROM 43.

First, a message such as "Scan the barcode on the collection form attached to the shipment." is displayed on the display section 46 (step T901). After the barcode image D3 on the collection form attached to the shipment is scanned by the scanner section 401 (YES at step T902), the value obtained by the scanner section 401 is compare with the value of the collection form digital signature data of each set of delivery form data stored in the RAM 42 to determine whether the RAM 42 stores delivery form data whose collection form digital signature data value matches the value obtained by the scanner section 401 (step T903).

If it is determined that the RAM 42 does not contain delivery form data whose collection form digital signature data value matches the value obtained by the scanning (NO at step T903), a message such as "The shipment is not listed in the delivery form data." indicting that there is not delivery form data that matches the scanned shipment is displayed on the display section 46 (step T904), then the process proceeds to step T906.

On the other hand, if it is determined that the RAM 42 contains delivery form data with the collection form digital signature data value that matches the value obtained by the scanning (YES at step T903), a tag indicating that there is a corresponding shipment (called shipment tag) is added to the matching delivery form data (step T905). Then, determination is made as to whether all sets of delivery form data stored in the RAM 42 have tags added (T906).

If it is determined that all delivery form data stored in the RAM 42 have shipment tag added (YES at step T906), a message such as "All shipments corresponding to the delivery form data have been confirmed." is displayed on the display section 46 indicating that all shipments corresponding to the delivery form data have been confirmed (step T907), then the delivered shipment confirmation process will end.

On the other hand, if it is determined that there is delivery form data without a shipment tag (NO at step T906), determination is made as to whether an instruction to discontinue the scanning has been input through the input section 45 (step T908). If it is determined that an instruction to discontinue the scanning has not been input through the input section 45 (NO at step T908), the process returns to step T901. If it is determined that an instruction to discontinue the scanning has been input through the input section 45 (YES at step T908), delivery form data without a shipment tag is extracted from the RAM 42 and variable N is assigned to the form number of the extracted delivery form data (step T909). Then, a message such as "The shipment with form number N has not been found. Contact the person in charge." is displayed indicating that there is no shipment with the form number N (step T910), then the delivered shipment confirmation process will end.

After completion of the delivered shipment confirmation process, a delivery confirmation input process is performed on the delivery portable terminal 4 as depicted in FIG. 7B (step T15 of FIG. 7B).

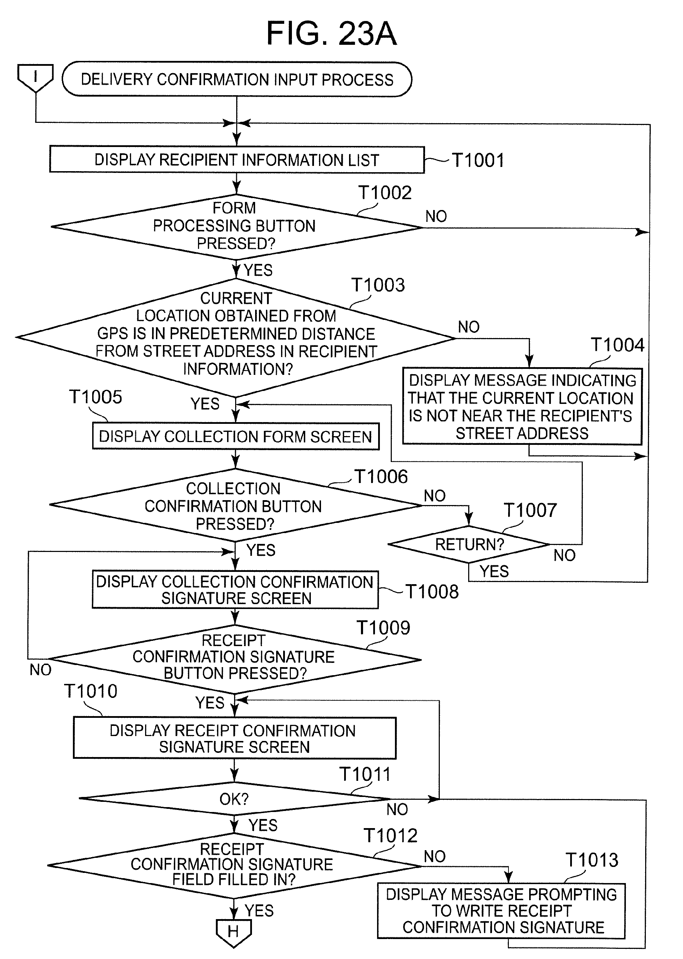

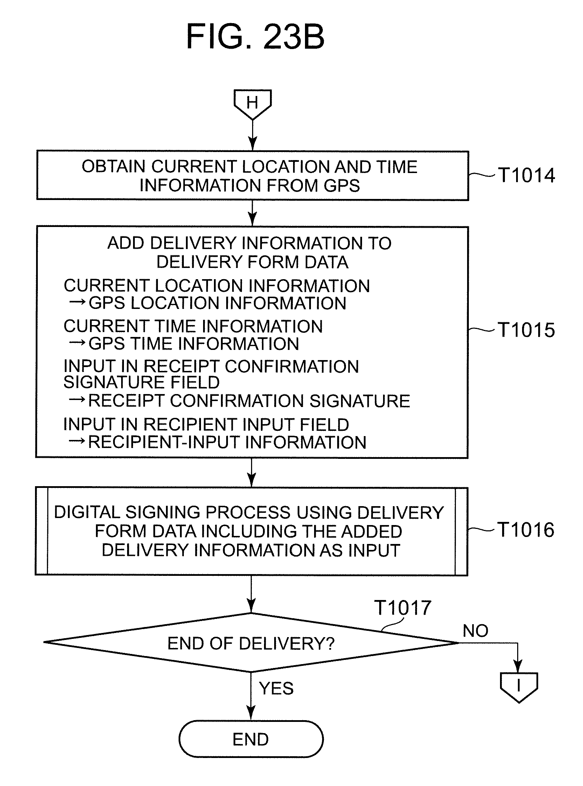

Figs 23A and 23B are flowcharts of the delivery confirmation input process executed by the CPU 41 of the delivery portable terminal 4 at step T15 of FIG. 7B. The delivery confirmation input process is executed by the CPU 41 in cooperation with a program stored in the ROM 43.

First, a list of recipient information based on the downloaded delivery form data is displayed on the display section 46 (step T1001 of FIG. 23A). The screen (not shown) displayed at step T1001 displays, in addition to the list of the recipient information from the delivery form data, a form processing button for instructing the delivery portable terminal 4 to perform form processing for the delivery to a recipient selected from the list.

When recipient information is selected and the form depression button is pressed through the input section 45 (YES at step T1002), current location information is obtained from the GPS receiver 47 and determination is made as to whether the current location is within a predetermined distance from the street address in the recipient information (step T1003). If it is determined that the current location obtained from the GPS receiver 47 is not within the predetermined distance from the street address in the recipient information (NO at step T1003), a message such as "The address of the recipient is not near your current location. Check the recipient information." is displayed on the display section 46, indicating that the current location is not near the recipient's street address (step T1004), then the process returns to step T1001.

If it is determined that the current location obtained from the GPS receiver 47 is within the predetermined distance from the recipient' address in the recipient information (YES at step T1003), a collection form screen 461 is displayed on the display section 46 (step T1005). The collection form screen 461 is similar to the screen described with respect to FIG. 3 and therefore detailed description of the screen will be omitted.

If the collection confirmation button 461b on the collection form screen 461 is not pressed (NO at step T1006) but the return button 461c is pressed (YES at step T1007), the process returns to step T1001. When the collection confirmation button 461b on the collection form screen 461 is pressed (YES at step T1006), a collection confirmation signature screen 462 is displayed on the display section 46 (step T1008).

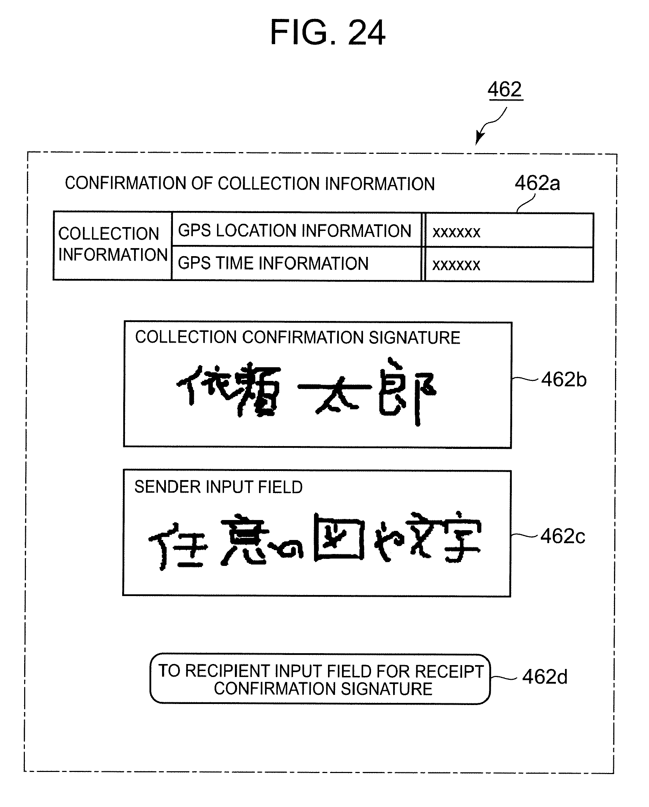

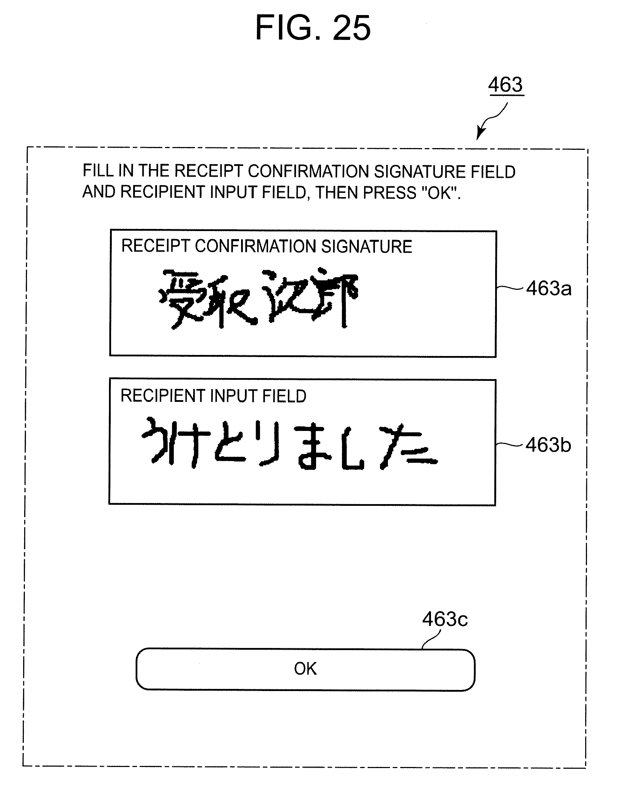

FIG. 24 illustrates an exemplary collection confirmation signature screen 462 displayed on the display section 46 at step T1008. As depicted in FIG. 24, the collection confirmation signature screen 462 displays a collection information field 462a, a collection confirmation signature field 462b, a sender input field 462c, and a receipt confirmation signature button 462d.
The collection information field 462a is an area where the GPS location information and GPS time information which are collection information contained in the delivery form data are displayed. The collection confirmation signature field 462a is an area where a collection confirmation signature input by the sender with a stylus or the like during the collection is displayed. The sender input field 462c is an area where any graphics or characters optionally input by the sender during the collection are displayed. The receipt confirmation signature button 462d is a button to be pressed to display a receipt confirmation signature screen 463 (see FIG. 25) for inputting a receipt confirmation signature.

When the receipt confirmation signature button 462d on the collection confirmation signature screen 462 is pressed through the input section 45 (YES at step T1009), the receipt confirmation signature screen 463 is displayed on the display section 46 (step T1010).

FIG. 25 illustrates an exemplary receipt confirmation signature screen 463. As depicted in FIG. 25, the receipt confirmation signature screen 463 displays a receipt confirmation signature field 463a, a recipient input field 463b, and an OK button 463c. The receipt confirmation signature field 463a is an area where the recipient input a receipt confirmation signature in handwriting with a stylus or the like. The recipient input field 463b is an area where the recipient optionally input any graphics and characters in handwriting. The OK button 463c is a button to be pressed to complete the input of data including the signature to proceed to the next process.

When the OK button 463c on the receipt confirmation signature screen 463 is pressed through the input section 45 (YES at step T1011), determination is made as to whether the receipt confirmation signature field 463a is filled in. If it is determined that the field is not filled in (NO at step T1012), a message prompting to enter a receipt confirmation signature, for example, "Signature has not been made on the receipt confirmation signature field. Write your signature." is displayed on the display section 46 (step T1013) and then the process returns to step T1010.

If it is determined that the receipt confirmation signature field 463a is filled in (YES at step T1012), current location information and current time information are obtained from the GPS receiver 47 (step T1014 of FIG. 23B), the obtained current location information and current time information are added to the delivery information in delivery form data as GPS location information and GPS time information, respectively, and the data input in the receipt confirmation signature field 463a and the data input in the recipient input field 453b are added to the delivery form data as the receipt confirmation signature in the delivery information and recipient-input information, respectively (step T1015).

Then, a digital signing process is performed using the delivery form data containing the delivery information as input data (step T1016 of FIG. 23B). The flow of the digital signing process is similar to the process described with respect to FIG. 15 and therefore detailed description of the digital signing process will be omitted here. The digital signing process at step T1016 is performed by using the delivery form data to which the delivery information is added as input data. The private key of the delivery portable terminal 4 is used for encrypting the hash values. The combination of delivery form data and digital signature data is referred to as digitally signed delivery form data.

Steps T1001 through T1016 are repeated until the digitally signed delivery form data for all available delivery form data is generated or a delivery end instruction is input through the input section 45 to end the delivery. When the delivery ends (YES at step T1017), the delivery form confirmation input process will end.

After the delivery has ended, the delivery person returns to the dispatch center with the delivery portable terminal 4, places the delivery portable terminal 4 on a cradle, not shown, and presses the delivery form upload button on the input section 35. Upon depression of the delivery form upload button on the delivery portable terminal 4 on the cradle, a delivery form data upload process is started (step T16 of FIG. 7B).

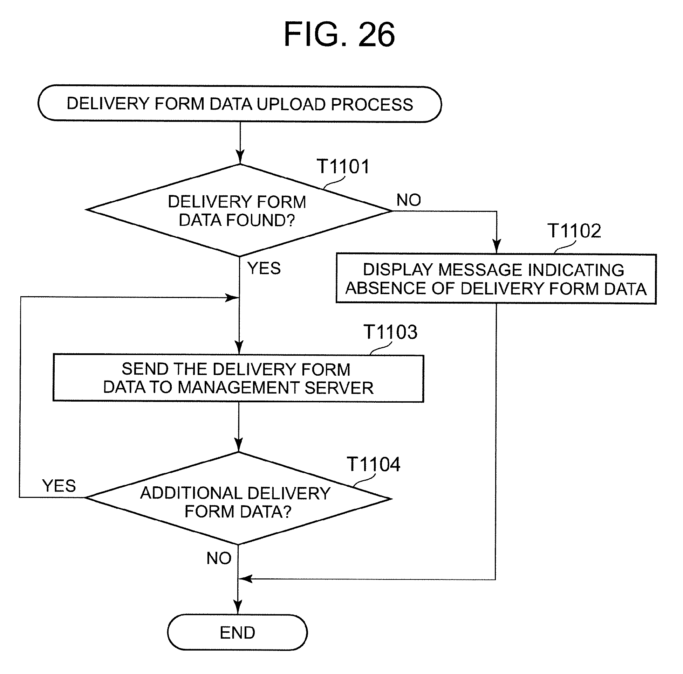

FIG. 26 is a flowchart of the delivery form data upload process executed by the CPU 41 of the delivery portable terminal 4 at step T16 of FIG. 7B. The delivery form data upload process is executed by the CPU 41 in cooperation with a program stored in the ROM 43.

First, determination is made as to whether the RAM 42 contains delivery form data (including digitally signed delivery form data). If it is determined that the RAM 42 does not contain delivery form data (NO at step T1101), a message such as "No delivery form has been found." is displayed on the display section 46 indicating there is no delivery form data (step T1102), then the delivery form data upload process will end.

If it is determined that the RAM 42 contains delivery forma data (YES at step T1101), an upload request is sent to the management server 1 through the communication section 48 together with the delivery form data stored in the RAM 42 (step T1103). The delivery form data sent is deleted from the RAM 42.

Then determination is made as to whether the RAM 42 contains additional delivery form data and, if it does (YES at step T1104), the process returns to step T1103, where the next delivery form data is sent to the management server 1 through the communication section 48. If it is determined that the RAM 42 does not contain additional delivery form data (NO at step T1104), the delivery form data upload process will end.

When the upload request from the delivery portable terminal 4 is received through the communication section 17 as depicted in FIG. 7B, a delivery form verification process is performed on the management server 1 (step T17 of FIG. 7B).

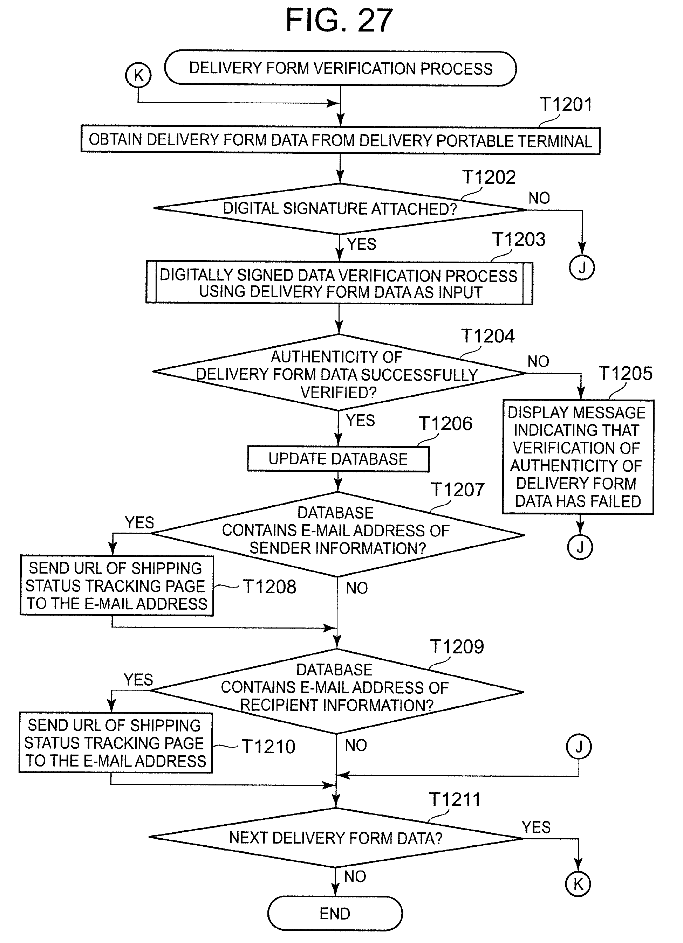

FIG. 27 is a flowchart of the delivery form verification process executed by the CPU 11 of the management server 1 at step T17 of FIG. 7B. The delivery form verification process is executed by the CPU 11 in cooperation with a program stored in the ROM 13.

First, delivery form data is obtained from the delivery portable terminal 4 through the communication section 17 (step T1201). Then, determination is made as to whether a digital signature is attached to the received delivery form data and, if the digital signature is not attached (NO at step T1202), the process proceeds to step T1211.

On the other hand, if it is determined that a digital signature is attached to the received delivery form data (YES at step T1202), a digitally signed data verification process is performed by using the delivery form data as input data (step T1203). The digitally signed data verification process is similar to the process described with respect to FIG. 19 and therefore detailed description of the process will be omitted here. The public key obtained from the terminal certificate of the delivery portable terminal 4 stored in the storage section 16 is used for decrypting the digitally signed data.

After completion of the digitally signed data verification process, determination is made on the basis of the result of the process as to whether the authenticity of the delivery form data has been successfully verified (step T1204). If it is determined that the verification of the authenticity of the delivery form data has failed (NO at step T1204), an error message like "The verification of authenticity of the delivery form data has failed." is displayed on the display section 15 (step T1205) and then the process proceeds to step T1211.

On the other hand, if it is determined that the authenticity of the delivery form data has been successfully verified (YES at step T1204), the database 161 is searched for a record with the same form number as that of the received delivery form data and the record found is updated with the received delivery form data (step T1206). Specifically, the management information, sender information, collection information, recipient information, collection form data digital signature, delivery information and delivery form data digital signature (digital signature data of delivery form data) contained in the delivery form data is written into the found record.

Then, determination is made as to whether the sender information in the found record includes an e-mail address and, if it does (YES at step T1207), an e-mail for giving notice of the URL of a shipping status tracking page (see FIGS. 29 and 30) is generated and sent to the e-mail address contained in the sender information through the communication section 17 (step T1208). Then the process proceeds to step T1209. The shipping status tracking page is a Web page that allows the sender and the recipient to check the shipping status. The URL includes for example information for identifying the storage location of the found record in the database 161. On the other hand, if it is determined that sender information in the found record does not include an e-mail address (NO at step T1207), the process proceeds to step T1209.

At step T1209, determination is made as to whether the recipient information in the found record includes an e-mail address and, if it does (YES at step T1209), an e-mail for giving notice of the URL of the shipping status tracking page is generated and sent to the e-mail address in the recipient information through the communication section 17 (step T1210) and then the process proceeds to step T1211. On the other hand, if it is determined that the recipient information in the found record does not include an e-mail address (NO at step T1209), the process proceeds to step T1211.

At step T1211, determination is made as to whether a request to send the next delivery form data from the delivery portable terminal 4 has been received at the communication section 17. If it is determined that a request to send the next delivery form data has been received (YES at step T1211), the process returns to step T1201. If it is determined that a request to send the next delivery form data has not been received and the communication session with the delivery portable terminal 4 has ended (NO at step T1211), the delivery form verification process will end.

As illustrated in FIG. 7B, when the URL of the shipping status tracking page provided from the management server 1 is accessed on the sender's PC 5 or the recipient's PC 6 (steps T18, T19), a shipping status tracking page providing process is performed on the Web server 2 (step T20).

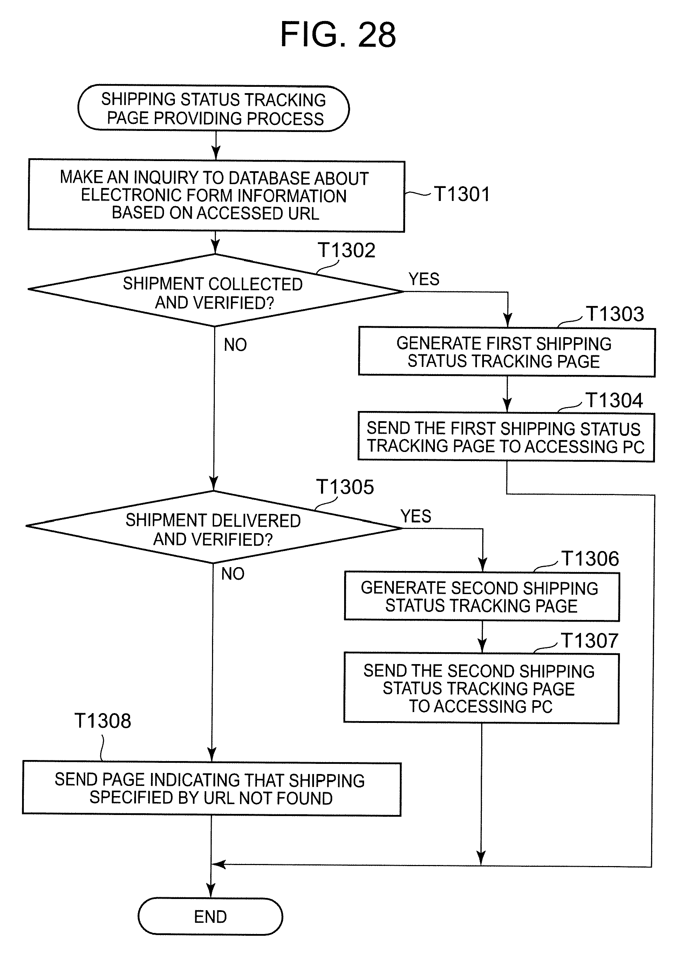

FIG. 28 is a flowchart of the shipping status tracking page providing process executed by the CPU 21 of the Web server 2 at step T20 of FIG. 7B.

First, based on the URL specified from the sender's PC 5 or the recipient's PC 6, inquiry is made to the database 161 at the management server 1 about the electronic form information associated with the sender's PC 5 or the recipient's PC 6 (step T1301).

At the management server 1, the database 161 is searched for the electronic form information identified by the specified URL. If the specified electronic form information is not found, a response indicating that the electronic form information specified has not found is sent back to the Web server 2. If the specified electronic form information is found and the electronic form information includes delivery information and delivery form digital signature data, a response indicating that the shipment has been delivered and verified is sent back to the Web server 2. If the electronic form information does not contain delivery information and delivery form digital signature data but contains collection information and collection form digital signature data, a response indicating that the shipment has been collected and verified is sent back to the Web server 2. As illustrated in FIGS. 18B and 27, the URL is provided to the sender or the recipient only if the shipment consigned by the sender has been collected and verified or the shipment has been delivered to the recipient and verified. Otherwise, a response indicating that the corresponding electronic form information does not exist is sent back to the Web server 2 even if the electronic form information has been found.

Then, determination is made on the basis of the response from the management server 1 as to whether the electronic form information identified by the URL indicates that the shipment has been collected and verified (step T1302). If it is determined that the electronic form information identified by the URL indicates that the shipment has been collected and verified (YES at step 1302), the electronic form information is obtained from the management server 1 and page data for displaying a first shipping status tracking page is generated based on the obtained electronic form information (step T1030). The generated page data is sent to the accessing sender's PC 5 or recipient's PC 6 through the communication section 27 (step T1304), then the shipping status tracking page providing process will end.

FIG. 29 illustrates an exemplary first shipping status tracking page 700 displayed on the sender's PC 5 or the recipient's PC 6. The first shipping status tracking page 700 is displayed for example when the sender's PC 5 or the recipient's PC 6 accesses the shipping status tracking page in the period between the time the URL of the shipping status tracking page is provided at step T10 of FIG. 7A and the end of the delivery form verification process at step T17. As illustrated in FIG. 29, the shipping status tracking page 700 displays information required for checking the collection status, extracted from the electronic form information. Specifically, specifics of digitally signed collection form data D11, an image of a collection confirmation signature D12, and an image of an input in recipient input field D13. The sender can check the information about the shipping that the sender consigned for any errors or check to see that none of the signature and information the sender wrote during the collection has been tempered with. The recipient can check the information about the shipping consigned by the sender and see that the shipment has been collected. The first shipping status tracking page 700 displays a "File download" button B1. The sender and the recipient can press the button B to download digitally signed collection form data, the CA certificate of the certificate authority, and the terminal certificate of the collection portable terminal 3 used for the collection to the sender's PC 5 and the recipient's PC 6, respectively, to verify the authenticity of the data for themselves.

Returning to FIG. 28, if it is determined that the electronic form information identified by the URL indicates that the shipment has not been collected or verified (NO at step 1302), then determination is made as to whether the electronic form information identified by the URL indicates that the shipment has been delivered and verified (step T1305). If it is determined that the electronic form information identified by the URL indicates that the shipment has been delivered and verified (YES at step 1305), the electronic form information is obtained from the management server 1 and page data for displaying a second shipping status tracking page is generated based on the obtained electronic form information (step T1306). The generated page data is sent to the accessing sender's PC 5 or recipient's PC 6 through the communication section 27 (step T1307) and then the shipping status tracking page providing process will end.

On the other hand, if it is determined that the electronic form information identified by the URL indicates that the shipment has not been delivered and verified (NO at step 1305), page data notifying that the specified shipping does not exist, such as "The shipping specified by the URL does not exist.", is read out from the storage section 26, and is sent to the accessing sender's PC 5 or recipient's PC 6 through the communication section 27 (step T1308), then the shipping status tracking page providing process will end.

FIG. 30 illustrates an exemplary second shipping status tracking page 701. As illustrated in FIG. 30, the second shipping status tracking page 701 displays information required for checking collection or delivery of a shipment, extracted from the electronic form information. Specifically, the second shipping status tracking page 701 displays specifics of digitally signed delivery form data D21, an image of a collection confirmation signature D22, an image of an input in the sender input field D23, an image of a receipt confirmation signature D24, and an image of an input in the recipient input field D25. The sender can check the page to see whether the shipment has arrived at the recipient location, whether the information about the consigned shipment is correct, whether none of collection time and date, location and the signature and other items the sender wrote during the collection have been tampered with. The recipient can check the page to see whether none of delivery location, time and date, receipt confirmation signature and other items have been tempered with. A "File download" button B2 is displayed on the second shipping status tracking page 701. The sender and recipient can press the button B2 to download the digitally signed delivery form data, the CA certificate of the certificate authority, the terminal certificate of the collection portable terminal 3 used for the collection, and the terminal certificate of the delivery portable terminal 4 used for the delivery to the sender's PC 5 and recipient's PC 6, respectively, to verify the authenticity of the data.

Having described above, in the delivery confirmation system 100, a collection portable terminal 3 attaches a digital signature to collection form data including collection confirmation information input by the sender through the input section 35 at the time of collection of a shipment and the current time and location obtained through the GPS receiver 37, and sends the digitally signed collection form data to the management server 1. The management server 1 uses the public key of the collection portable terminal 3 to verify the authenticity of the digitally signed collection form data received from the collection portable terminal 3 and, if the verification is successful, updates the database 161 storing electronic form information with the collection form data the authenticity of which has been successfully verified.

Consequently, the database 161 stores the collection form data including the authenticated collection time period, collection location, and collection confirmation information input by the sender. Therefore, these items of authenticated information can be used later to check the collection time and location, and collection confirmation information input by the sender.

Furthermore, a delivery portable terminal 4 in the delivery confirmation system 100 attaches a digital signature to delivery form data including receipt confirmation information input by the recipient through the input section 45 at the time of delivery of a shipment and the current time and location obtained through the GPS receiver 47, and sends the digitally signed delivery form data to the management server 1. The management server 1 uses the public key of the delivery portable terminal 4 to verify the authenticity of the digitally signed delivery form data received from the delivery portable terminal 4 and, if the verification is successful, updates the database 161 storing electronic form information with the delivery form data the authenticity of which has been successfully verified.

Consequently, the database 161 stores the delivery form data including authenticated delivery time and location and the receipt confirmation information input by the recipient. Therefore, these items of authenticated information can be used later to check the delivery time period and location, and delivery confirmation information input by the recipient.

Moreover, each of the collection portable terminal 3 and delivery portable terminal 4 includes a security chip inaccessible to external programs. The private key to be used for digital signature is stored in the security chip and is used for attaching the digital signature to collection form data and delivery form data. Therefore, the security of the private key, collection form data and delivery form data can be ensured.

The management server 1 stores the terminal certificate of the collection portable terminal 3 including the public key of the collection portable terminal 3. When the management server 1 receives digitally signed collection form data from the collection portable terminal 3, the management server 1 separates the digitally signed collection form data into the body data and the digital signature data. The management server 1 decrypts the digital signature data by using the public key of the collection portable terminal 3 to obtain a first hash value and inputs the body data into a hash function to calculate a second hash value. The management server 1 then can compare the first hash value with the second hash value to verify the authenticity of the collection form data. Similarly, the management server 1 stores terminal certificate of the delivery portable terminal 4 including the public key of the delivery portable terminal 4. When the management server 1 receives digitally signed delivery form data from the delivery portable terminal 4, the management server 1 separates the delivery form data into the body data and the digital signature data. The management server 1 decrypts the digital signature data by using the public key of the delivery portable terminal 4 to obtain a first hash value and inputs the body data to a hash function to calculate a second hash value. The management server 1 then can compare the first hash value with the second hash value to verify the authenticity of the delivery form data.

The delivery confirmation system 100 also includes the Web server 2 that generates and makes available on the Internet a shipping status tracking page, which is a Web page for providing authenticated, digitally signed electronic form data (collection form data or delivery form data) to the sender or recipient of a shipment. Accordingly, the sender and the recipient of the shipment can readily check the Web page to see whether the shipment has been collected, whether the shipment has arrived at a dispatch center, or whether the shipment has been delivered to the recipient.

Since the URL of the shipping status tracking page is provided to the sender's PC 5 and the recipient's PC 6, the sender and the recipient can readily check the page on the Web to see whether the shipment has been collected, whether the shipment has been delivered, and the like.

The Web server 2 receives on the shipping status tracking page a request to download authenticated digitally signed electronic form data (collection form data or delivery form data) sent from the sender's PC 5 or the recipient's PC 6, and sends the authenticated digitally signed collection form data, delivery form data, terminal certificate, or other data in response to the download request. Therefore the sender or the recipient can download collection form data or the delivery form data to the sender's PC 5 or the recipient's PC 6 to verify the authenticity of the data for themselves.

Since the collection confirmation information and the receipt confirmation information are input through a handwriting touch screen, the collection confirmation information and the receipt confirmation information can be input in much the same way as a conventional handwritten signature is made for confirm collection and receipt.

The embodiment described above is a preferable example of the delivery confirmation system 100 according to the present invention and the present invention is not limited to the embodiment.

For example, the input section in the present embodiment includes a touch screen and the sender and the recipient input their collection and receipt confirmation signatures in handwriting on the touch screen during collection or receipt of a shipment. However, collection confirmation information indicating the sender's confirmation of collection of the shipment and the receipt confirmation information indicating the recipient's confirmation of receipt of the shipment are not limited to handwritten signatures and the input section is not limited to a touch screen. For example, the input section may be input means that allows input of information such as images of the sender and recipient, digital seals, finger prints, or irises of the sender and recipient by which the sender and recipient can be identified.

While the management server 1 and the Web server 2 in the embodiment described above are provided separately from each other, the function of the Web server 2 may be included in the management server 1, thereby implementing the management server 1 and the Web server 2 as a single server.

Electronic form data (collection form data and delivery form data) containing information identifying the times, locations, and the pickup person and delivery person are digitally signed at the time of collection and the delivery to confirm both collection and delivery in the embodiment described above. However, either one of the collection and the delivery may be confirmed in this way in an alternative embodiment of the system.

While the collection portable terminal 3 and the delivery portable terminal 4 in the embodiment described above are connected onto the corporate network N1 through a cradle to send and receive data to and from the management server 1, the method of data communication between them is not limited to this. For example, the collection and delivery portable terminals 3 and 4 may directly send and receive data to and from management server 1 by radio communication or through a data communication cable such as a USB (Universal Serial Bus) cable.

Other details of configurations and operations of the components of the delivery confirmation system 100 can be modified as appropriate without departing from the spirit of the present invention.

Although various exemplary embodiments have been shown and described, the invention is not limited to the embodiments shown. Therefore, the scope of the invention is intended to be limited solely by the scope of the claims that follow.

## Claims

1. A portable terminal connected to a server, the portable terminal, comprising:
a communication section to send and receive data to and from the server;
a time obtaining section to obtain current time;
a location obtaining section to obtain a current location of the portable terminal;
an input section to input receipt confirmation information indicating that a recipient of a shipment has received the shipment; and
a control section to cause a digital signature to be attached to electronic form data, and to cause the communication section to send the electronic form data with the digital signature to the server, the electronic form data including the receipt confirmation information input through the input section when the shipment is received, the current time obtained by the time obtaining section when the shipment is received, and the current location obtained by the location obtaining section when the shipment is received.

2. The portable terminal according to claim 1, further comprising a security chip which holds a private key used when attaching the digital signature to the electronic form data and which attaches the digital signature to the electronic form data using the private key,
wherein the control section causes the security chip to attach the digital signature to the electronic form data.

3. The portable terminal according to claim 1 or 2, wherein the input section includes a touch screen for inputting handwriting characters.

4. A delivery confirmation system, comprising:
the portable terminal of any one of claims 1 to 3; and
the server,
wherein:
the server comprises:
a communication section to send and receive data to and from the portable terminal; and
a control section to verify authenticity of the electronic form data with the digital signature received from the portable terminal through the communication section.

5. The delivery confirmation system according to claim 4, wherein:
the server further comprises a storage section to store a digital certificate of the portable terminal, the digital certificate including a public key of the portable terminal,
wherein the control section of the server separates the electronic form data with the digital signature into body data and digital signature data, decrypts the digital signature data by using the public key to obtain a first hash value, inputs the body data into a hash function to calculate a second hash value, and compares the first hash value with the second hash value to verify the authenticity of the electronic form data.

6. The delivery confirmation system according to claim 4 or 5, further comprising a Web server which generates a Web page for providing a sender and the recipient of the shipment with the authenticated electronic form data with the digital signature to put the Web page on the Internet.

7. The delivery confirmation system according to claim 6, further comprising:
a sender's terminal used by the sender of the shipment; and
a recipient's terminal used by the recipient of the shipment,
wherein the server further comprises a notification section which is Internet-capable to notify the sender's terminal and the recipient's terminal of a URL of the Web page via the Internet.

8. The delivery confirmation system according to claim 7, wherein the Web server receives a request for downloading the authenticated electronic form data with the digital signature from the sender's terminal or the recipient's terminal through the Web page, and sends the authenticated electronic form data with the digital signature and the digital certificate of the portable terminal to the requesting sender's terminal or recipient's terminal in response to the request.

9. A computer program product readable by a computer and encoding instructions for executing a computer process, the computer being used for a portable terminal connected to a server, the computer process, comprising:
sending and receiving data to and from the server by a communication unit;
obtaining current time by a timer unit;
obtaining a current location of the portable terminal from GPS;
inputting receipt confirmation information indicating that a recipient of a shipment has received the shipment; and
causing a digital signature to be attached to electronic form data, and causing the communication unit to send the electronic form data with the digital signature to the server, the electronic form data including the receipt confirmation information when the shipment is received, the current time obtained by the timer unit when the shipment is received, and the current location when the shipment is received.
